(19) **Europäisches Patentamt**
**European Patent Office**
**Office européen des brevets**

(11) **EP 2 233 738 A1**

(12) **EUROPEAN PATENT APPLICATION**
published in accordance with Art. 153(4) EPC

(43) Date of publication:
**29.09.2010 Bulletin 2010/39**

(51) Int Cl.:
*F03D 9/00* (2006.01)  *F24J 2/22* (2006.01)
*F01D 5/00* (2006.01)  *F01D 9/00* (2006.01)

(21) Application number: **08876551.6**

(22) Date of filing: **29.12.2008**

(86) International application number:
**PCT/RU2008/000807**

(87) International publication number:
**WO 2010/005337 (14.01.2010 Gazette 2010/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Kiknadze, Gennady Iraklievich**
**Ul. Marshala Biryuzova 4/1-129**
**Moscow 123298 (RU)**

(72) Inventors:
• **GACHECHILADZE, Ivan Alexandrovich**
  **Moscow 129090 (RU)**
• **OLEINIKOV, Valery Grigorievich**
  **Mytischi**
  **Moskovskaya obl. 141014 (RU)**

(74) Representative: **Bucher, Ralf Christian**
**Patentanwalt Dipl.-Ing.**
**Alte Landstrasse 23**
**85521 Ottobrunn (DE)**

(54) **CONVERTER AND AN ENERGY CONVERSION METHOD, A TORQUE FLOW PUMP AND A TURBINE**

(57) The disclosed invention is aimed at developing environmentally clean sources of mechanical and/or electrical energy, which do not require the use of organic or nuclear fuel, at raising the efficiency of low-potential heat sources, including the thermal waste of anthropogenic activities, and at reducing harmful discharges to the atmosphere. The technical result is attained owing to the fact that the disclosed method for tornado-type conversion of energy of continuous medium, tornado-type energy converter (alternative embodiments), solar energy converter, method for magneto-thermal conversion of energy, tornado-type converter of magneto-thermal energy, tornado-type blower, and tornado-type turbine utilize the effect of self-organization of tornado-like jets and devices for forming man-made tornados.

Fig. 1

**Description**

TECHNICAL FIELD

The present inventions relate to aero hydrodynamics, power generation, and magnetic technologies and, to be more exact, to the formation of tornado-like swirling flows of gases, liquids, and/or their two-phase mixtures, and to integrated conversion of their kinetic power.

BACKGROUND ART

Patents and proposals are known in scientific periodicals and in patent literature, which relate to integrated conversion and utilization of the power of low-potential sources, including renewable sources, by way of combining them in unified systems. However, no proposals are available on the uses of

- integrated methods for tornado-type and magneto-thermal conversion of low-potential energy of continuous medium to mechanical and/or electrical energy;
- tornado-type devices for conversion of energy of solar radiation to heat and for further utilization of this heat for tornado-type and magneto-thermal generation of power or for other purposes; and
- tornado-type air, hydraulic, and magneto-thermal devices for conversion of low-potential kinetic, thermal, and magnetic-field energy to full-potential mechanical and/or electrical energy, which are combined in a unified energy-converting complex.

Proposals exist, which relate to the utilization of energy of natural phenomena such as fluxes of solar radiation, wind, geothermal waters, sea and ocean high and low tide, flows of small and large rivers, which are combined in integrated energy-converting systems.
However, prior-art proposals do not disclose the uses of tornado-type methods and devices, which concentrate the low-potential energy of the above-listed natural phenomena in tornado-like swirling jets. For example, no use is made of

- methods and devices for the formation of self-organizing quasi-potential tornado-like jets for the purpose of most efficient conversion of energy concentrated in these jets to full-potential energy;
- flows with built-in tornado-like jets, and tornado-type enhancement of heat and mass transfer between low-potential heat fluxes and surfaces subjected to flow; the efficiency of such enhancement significantly exceeds the efficiency of conventional methods for enhancement of heat and mass transfer.

Of prior art proposals, close to the proposed inventions are the inventions under the following patents: GB 16709, 1887; US 428 057, 1890; SU 1 295 027, SU 1 341 377, SU 1 414 046, SU 1 453 998, SU 1 793 525, JP 59 025 091, RU 2 020 304, RU 2 023 216, RU 2 040 127, RU 2 044 248, SG 47 069, RU 2 059 881, EP 0 839 309, EP 92 911 873, EP 96 927 047, US 6 006 823, US 6 119 987, RU 2 109 173 C1, RU 2 109 227, RU 2 167 338, RU 2 172 904, RU 2 183 801, RU 2 199 025, RU 2 199 024, RU 2 210 840, RU 2 210 839, WO 03 004 868, EP 03 012 638, EP 1 458 972, WO 2004 048 871, WO 2004 083 651, WO 2004 083 628, US 2004/0240984 A1, EP 1 606 512, PCT/RU 2005/000096, EP 1 873 397 A2, EP 1 878 983 A1, EP 1 890 035 A2, CN 1 888 359.
A group of the documents listed above, namely, RU 2 059 881, WO 03 004 868 - 2003-01-16, EP 03 012 638 - 2003-03-06, EP 1 458 972 - 2004-09-22, WO 2004 083 628 - 2004-09-30, US 2004/0240984 A1, and EP 1 606 512- 2005-12-21, protect various methods for tornado-type conversion of energy of gas and liquid flows, for example, of wind and water, and indicate the necessary and sufficient conditions for the formation of flow of continuous medium of new type, namely, tornado-like quasi-potential radially convergent swirling jets. The conditions for formation of these jets are based on the results of analysis of exact solutions of unsteady-state equations of fluid dynamics (Navier-Stokes and continuity equations); according to the documents listed above, these jets are employed for developing various *static* apparatuses which form tornado-like swirling flows in viscous continuous media. There is known a method for conversion of energy of flow of continuous medium to mechanical energy, which is referred to as **TWES** (Tornado Wind Energy Systems). The known **TWES** are vertical towers of cylindrical shape, within which a tornado-like swirling flow is formed. This flow arises owing to air flows which flow into the tower via one or plurality of side slots forming an arbitrary (but constant for the given tower structure) angle with the local radius of the structure. For example, in the cited references, the slots in one of the proposed towers are open on the windward side and closed on the leeward side. On passing through the slots, the wind flow acquires a tangential component of velocity and swirls within the tower. A lower-pressure zone is formed in the core of such flow, and this provides for the suction of additional masses of air into the tower via its lower end placed on a special device, a "wind box". The sucked-in flow is delivered to a turbine which converts its kinetic power to mechanical. The swirling flow above the turbine in the form of a tornado-like jet is streaming toward the tower outlet and carries over the mass of the medium which entered the tower and therefore decelerated (see, for example, Rangwalla, A.A. and Hsu, C.T., Power Coefficient of Tornado-Type Wind Turbines, Energy, 1983, vol. 7, no. 6, p. 735; Hsu, C.T. and Ide, H., Performance of Tornado Type Wind Turbines with Radial Supply, Energy, vol. 7, no. 6, p. 452).

The authors of cited references and other researchers (see, for example, So, R.M.C., On Vortex Wind Power, J. Fluids Eng., 1978, vol. 100, p. 79) erroneously believe that the fields of velocity and pressure in **TWES** are characterized by distributions of velocity and pressure known for Burgers vortex (Burgers, J.M., A Mathematical Model Illustrating the Theory of Turbulence, Adv. Appl. Mech., 1948, vol. 1, p. 157). However, the realization of this method in model devices failed to support this assumption and revealed serious losses caused by the absence of conditions for direct joining of lines of flow in jets flowing via slots into the tornado tower with lines of flow of the tornado-like flow being formed (see, for example, Mitchell, A., Investigations of the Tornado Wind Energy System, published by the American Solar Energy Society, June 1985).

Solar towers and **TWES** are known (see, for example, JP 59 025 091 A 06.02.84, EP 1 873 397 A2, EP 1 878 983 A1, and EP 1 890 035 A2), in the case of which solar preheating is used for stimulating the emergence of thermally induced air flow directed to turbine, or steam is generated, which forms a thermally induced flow at working temperatures in vertically arranged towers.

In addition, the disadvantages of the above-said methods of tornado-type conversion of energy, proposed in the cited patents and in earlier publications describing the methods and facilities of **TWES,** include the relatively high cost of kilowatt-hour of converted energy compared to energy generated by conventional methods, which is due to their low efficiency because of deceleration of flow incident on large-sized structures of devices converting the kinetic power of air flows, and the absence of conditions for the formation of tornado-like flow in the flow interacting with turbine in the proposed **TWES** or of steam flows in solar towers. The above-said disadvantages cause the dissipation of energy in the process of its conversion; they rule out the possibility of shock-free and separation-free motion of continuous medium, which is necessary for the formation of tornado-like quasi-potential flow.

Closest of all to the proposed method is the method wherein, for the purpose of energy conversion, a flow of continuous medium is delivered to the selected axially symmetric volume of convergent shape via two systems of guide channels which provide for the motion of delivered medium along helical trajectories converging towards the symmetry axis of selected volume; in so doing, the first system of channels is used to form swirling flow by imparting a torque to flows in channels and concentrating the power in said channels owing to convergence of the flow. The thus formed flow is directed to the zone of kinetic-to-mechanical power conversion; the second system of channels is used to form a swirling flow, and the pressure in this flow is reduced; as a result, the flow sucks in the continuous medium issuing from the conversion zone and evacuates this medium beyond the converter (see WO 2004083628, 2004.09.30).

The disadvantages of the prior art method for tornado-type conversion of ener-gy includes:

- a significant loss of power of the flow of continuous medium incident on the tower and utilized for energy conversion; this loss is due to deceleration of flow by the boundary surfaces of the converter device, which are located in the path of this flow, for example, of wind flows onto the boundary surfaces of tornado towers wherein the kinetic power of wind is concentrated and converted, as well as of flows of other gaseous or liquid media;
- the absence of conditions for separation-free and shock-free flow of continuous medium at the inlet into the tower, which must be satisfied for realizing the method; the absence of these conditions complicates the construction of proposed tornado-type converters of energy. The conversion of wind energy using the methods proposed in the cited patents and papers causes a significant decrease in the air velocity $U_\infty$ at the tower inlet and, as a result, a significant reduction of the wind flow power N being converted and dependent on the cube of velocity $U_{in}$ of continuous medium flowing into the "tornado tower" ($N \sim U_{in}^3$). This universal regularity shows up in the processes of conversion of energy of continuous medium in any aggregate state and is responsible for the low efficiency of the method of tornado-type conversion of energy in converters with a static guide unit. In solar towers, the loss is caused by turbulent processes in the upward flow of heated steam.

The above-said disadvantages and the high cost of converted energy in the case of **TWES** were responsible for the decline of practical interest in this, undoubtedly important, sphere of power generation using renewable sources of energy.

The second group of the documents listed above, namely, RU 2 059 881, WO 03 004 868 - 2003-01-16 - 2003-03-06, EP 1 458 972 - 2004-09-22, WO 2004 083 628 - 2004-09-30, US 2004/0240984 A1, and EP 1 606 512 - 2005-12-21, protect various embodiments of devices for tornado-type conversion of energy of continuous external medium. The proposals contained in these documents are based on the use of a static guide unit developing, in combination with the structures of tornado tower, a resistance to incident flow; this results in a decrease in velocity at the tornado tower inlet and in a sharp reduction of the efficiency of energy conversion. The closest to the proposed energy converters (alternative embodiments) is the device for conversion of energy of flows of continuous media, which includes convergent chambers; systems of stationary channels located symmetrically about the central axle of the device, with the first one of these systems being made with axes in the form of helical lines; a turbine smoothly mating with a central internal fairing; an electric generator connected to the turbine by means of a central axle passing through the fairing; and a bearing structure (see WO 2004 083 628 - 2004-09-30).

The disadvantages of this prior art device include:

- the high cost of energy being converted, caused by large volumes of tornado-type convergent chambers and other structural elements, and the labor input required for their construction because of the need for providing a high accuracy of shapes and of spatial orientation of the tornado-like flow being formed;
- the low efficiency of energy conversion caused by the decrease in the velocity of flow of continuous medium into the chamber compared to the velocity of flow away from the chamber, which is due to the resistance of the chamber shapes and surfaces meeting the incoming flow; this disadvantage shows up especially clearly in the case of conversion of slow flows of medium, for example, weak wind flows. Indeed, the effect of deceleration of wind flow by the boundary surfaces of chambers is responsible for a sharp decrease in the level of conversion of power of flow, because the magnitude of converted power depends on the cube of velocity of the medium flowing into the tower.

The third group of the aforesaid documents, namely, GB 16709, 1887; US 428 057, 1890; SU 1 295 027, SU 1 341 377, SU 1 414 046, SU 1 453 998, SU 1 793 525, RU 2 167 338, RU 2 199 025, RU 2 199 024, RU 2 210 840, RU 2 210 839, protect various alternative embodiments of magneto-thermal converters of energy based on the theory of magnetism and on the utilization of conventional methods of heat and mass transfer.

Methods are known in the art for conversion of magnetic and thermal energy to energy of motion by way of making the working medium of magnetically soft materials which exhibit the property of acquiring ferromagnetic properties when cooled in the range of close-to-room temperatures and of making a transition to the paramagnetic state when heated. In other words, said materials are characterized by low values of temperature $T_C$ of magnetic phase transition (Curie point, see the cited patents). There are indications in almost all of the aforesaid proposals that it is possible to utilize the well-known phenomenon of attraction of magnets to one another for converting the magnetic energy to energy of motion; however, no technical solutions are available for the method for organization of magnetic fields and for initiation of the magneto-thermal process of conversion of magnetic and thermal energy to mechanical energy. This explains the absence of operating magneto-thermal energy converters, in spite of the long time that passed since the aforesaid proposals were disclosed.

The closest to the disclosed method is the patent whose authors claim as the obj ect of invention "a significant variation and extension of the functional capabilities of operation of magneto-thermal device owing to the method for organization of its operation, which enables one, in particular, to develop effective autonomous motors and generators of various types and purposes intended for the utilization of only low-potential natural sources of energy irrespective of weather conditions and time of the day" (see RU 2 199 025 C1, 20.02.2003).

The proposed method is based on the utilization of the energy of magnetic phase transformations and of heat with their subsequent conversion to the energy of motion of the working medium which is provided by a magnetically soft material exhibiting spontaneous magnetization at point $T_C$ of phase transition and the temperature dependence of magnetization. By placing the working medium into a polarizing magnetic field, in the closed volume of which a vapor-liquid mixture of low-boiling working liquid is located, the authors transfer the working medium from the paramagnetic to ferromagnetic state; as a result, the working medium under the effect of magnetic forces moves in the direction of their action from the zone with minimal value of magnetic field induction to the zone where the value of magnetic induction is maximal.

This prior art method suffers from the following disadvantages:

- the absence of evidence of possible sources of heating and cooling and of the method of utilization of said sources under conditions of unsteady heating and cooling of working elements adequate to the problem of energy conversion. Apart from the general statement of the necessity of heating and cooling the magnetically soft material, no indication is given that the proposed method is capable of providing, during relatively short times of contact with heating and cooling heat-transfer agents,
- magnetic phase transformations in the magnetically soft working medium,
- the required velocity of motion of piston with working elements, and
- an acceptable specific power of the converter.

Indeed, the proposals of the authors of RU 2 199 025 patent cannot be regarded as effective, because their main disadvantage, similar to the proposals made in other patents, consists in the difficulties of realizing unsteady heating and cooling of the working elements by conventional methods using any heat-transfer agent. First of all, this disadvantage is typical of gaseous heat-transfer agents of relatively low temperature (medium of low thermal potential); during the time of contact with them, these heat-transfer agents must provide for the paramagnetic-ferromagnetic-paramagnetic magnetic phase transitions in the mass of working elements. In the proposed invention, such a process may only be theoretical, because the fixed volume of the system, in which the magnetically soft material is located, limits the possibilities of utilizing the prior art processes of heat transfer by low-potential heat-transfer agents; therefore, the proposed method cannot be distinguished from other proposals pursuing the same objectives because no embodiments of the system of heating and cooling the working medium are disclosed in the patent.

The closest to the proposed device, i.e., converter of magneto-thermal energy to mechanical energy and/or its other forms, is a magneto-thermal device which includes a shaft-mounted rotor with active elements installed around the periphery, a source of thermal energy, and at least one magnet system (see SU 1 793 525 A, 07.02.93).

The disadvantages of said prior art device are as follows:

- the absence of evidence of the method of arrangement of rotating magnetically soft material in magnetic field and of the shape and number of working elements involved in developing the resultant moment of force in the direction of their motion, which define the magnitude of planned power of conversion of magnetic energy to mechanical energy or to its other forms;
- the absence of evidence of concrete methods of heating and cooling the rotating magnetically soft material in magnetic field and of the correlation between the characteristics of unsteady heat transfer and planned power of conversion of magnetic energy to mechanical energy or to its other forms;
- the use of optical lenses for focusing solar radiation onto the surface of working elements, which are rigidly secured on the housing; this impairs the efficiency of generator operation and gives urgency to the question of concrete methods of heating and cooling the rotating magnetically soft material in magnetic field; and
- the use of iron-rhodium alloy as the working medium, which limits the utility of the proposed device.

The fourth group of the documents, namely, EP 1 878 983 A1, EP 1 873 397 A2, and EP 1 890 035 A2, protect various alternative embodiments of solar towers which utilize the heat of solar radiation for converting this heat to steam, directing the flow of steam to a steam turbine, and generating mechanical power.

The solar towers are disadvantageous in that

- they are inoperative on cloudy days, at dusk, and at night;
- it is necessary to clean the surface of mirrors of dust and sand at regular intervals;
- it is necessary to prevent the emergence of "scale" on the steam-generating surfaces and on steam turbine blades. The fifth group of the documents listed above, namely, RU 2 023 216, RU 2 109 227, RU 2 172 904, RU 2 183 801, and RU 2 285 210, protect various alternative embodiments of solar-to-heat energy converters, which are based on the absorption of radiant energy by the surface of solid plates with coatings which exhibit high accommodation properties or by optically transparent liquids with finely divided particles of similar material.

A combination solar power plant is known in the art, which converts and simultaneously concentrates the solar energy for heating water and generating electrical power (RU 2 285 210 C, 10.10.2006).

The combination solar power plant under patent RU 2 285 210 includes a primary conic concentrator, a flat insulating connecting circular orifice plate, a central through opening of the primary conic concentrator, a tracking sensor, photocells of the tracking sensor, partitions of the tracking sensor, a hollow tubular heater in the form of a circle, photocells on the outer surface of the hollow tubular heater in the form of a circle, a secondary semi-parabolic concentrator turned through 360°, the inlet opening of the circular hollow tubular heater, and the outlet opening of the circular tubular heater.

The disadvantage of said prior art device consists in the absence of enhancement of the processes of lighting of the surfaces being heated and of enhancement of heat transfer between the surface being heated and the flow of water past this surface; this results in low efficiency of conversion of the energy of solar radiation.

The closest to the claimed converter of solar radiation energy to heat is a device comprising a hermetic housing with channels provided thereinside (see RU 2 183 801 C1, 20.06.2002).

The disadvantage of the latter prior art device is the low efficiency of conversion of solar radiation to heat because of the absence of enhancement of heat transfer.

The sixth group of the documents listed above protects various alternative embodiments of blowers of continuous medium into the volume of selected space.

The closest to the claimed tornado-type blower is a blower which has profiled blades with helical surface. Narrow helical slot-like channels formed by the side surfaces of the blades prevent the return efflux of air. The blades have a helix angle of 70°-80° on the outside diameter and of at least 55° on the inside diameter (see RU 2 109 173 C1, 20.04.1998).

The latter prior art solution is disadvantageous in that it is impossible to form a tornado-like jet in the volume of selected space and to control the profiles of velocity and pressure in the flow.

The documents of the seventh group protect various alternative embodiments of turbines converting the power of flows of continuous medium to mechanical energy.

Closest of all to the claimed tornado-type turbine is a turbine comprising a housing which accommodates blades arranged on a shaft, which receive the flow (see SU 1 662 172 A, 27.10.1996).

The disadvantage of said prior art solution is the low efficiency of conversion of the power of tornado-like flows, which is due to the high values of the azimuthal and longitudinal components of velocity.

DISCLOSURE OF THE INVENTION

The technical result of realization of the proposed method of tornado-type conversion of the energy of continuous medium includes

- the development of ecologically clean sources of mechanical and electrical energy and/or energy of other types, which would be fully independent of suppliers of organic and nuclear fuel;
- a significant increase in the efficiency of conversion of the energy of external medium in a selected ax symmetric volume owing to the formation in this volume of a self-organizing tornado-like jet, with the structure, velocity, and pressure field in this jet causing an increase in the velocity of flows of the medium into the selected volume irrespective of the aggregate state and the state of motion of the medium outside of this volume; this is accomplished by controlling the pressure difference between the external medium and swirling flow in the tower and by regulating the velocity $U_{out}$ of the flow of medium issuing from the ax symmetric volume, which results in a sharp increase in the power ($N \sim U_{out}^3$) of energy being converted;
- a reduction of friction drag of continuous medium flowing into the tower and moving thereinside by application onto the surfaces subjected to flow of reliefs in the form of alternating regions of initially smooth surfaces and regions of curvilinear surfaces in the form of recesses (dimples) of double curvature. Tornado-like jets are self-organized in flows past such reliefs, which provide for the reduction of aero hydrodynamic drag, enhancement of heat and mass transfer, self-cleaning of the shaped surfaces subjected to flow from adsorbed dirt and various impurities, and for other effects caused by the restructuring of the boundary layer on curvilinear surfaces and by variation of the laws of interaction of flow with reliefs of said shape;
- a significant increase in the efficiency, in the functional and technical-and-economic effectiveness of conventional power engineering which utilizes organic and nuclear fuel, owing to conversion to full-potential energy of a part of the energy of low-potential thermal waste dumped by steam and nuclear power plants to the atmosphere and/or water reservoirs;
- the augmentation of energy resources and the environmental protection in virtually all regions of the world by raising the efficiency of utilization of low-potential heat of renewable sources of energy and thermal waste of anthropogenic activities;
- the reduction of amounts of organic fuel utilized in the domestic and industrial spheres;
- the reduction of the level of emission of carbon dioxide ($CO_2$) and thermal domestic and industrial waste to the atmosphere and water reservoirs;
- the reduction of cavitation wear and prevention of failure of hydraulic mechanisms and devices employed in tornado-type converters of energy and in conventional energy systems such as hydraulic pumps, hydraulic turbines, etc.;
- improvements of the technical-and-economic performance of units employed in nonconventional power generation and of their competitiveness versus conventional methods of power generation.

The technical result of realization of the proposed tornado-type converters of energy (alternative embodiments) includes

- the development of ecologically clean sources of mechanical and electrical energy and/or energy of other types, which would be fully independent of suppliers of organic and nuclear fuel;
- an increase in the efficiency of conversion of the energy of external medium owing to the development of tornado towers with movable guide vanes within their volume set to motion, for example, by a magneto-thermal drive utilizing low-potential fluxes of thermal energy such as heat-transfer agents which are heated or cooled by solar radiation and provide for the use of magneto-thermal conversion of energy;
- a reduction of friction drag of continuous medium flowing into the tower and moving therein side by application onto the surfaces subjected to flow of reliefs in the form of alternating regions of initially smooth surfaces and regions of curvilinear surfaces in the form of recesses (dimples) of double curvature; tornado-like jets are self-organized in flows past such reliefs, which provide for the reduction of aero hydrodynamic drag, enhancement of heat and mass transfer, self-cleaning of the shaped surfaces subjected to flow from adsorbed dirt and various impurities, and for other effects caused by the restructuring of the boundary layer on curvilinear surfaces and by variation of the laws of interaction of flow with reliefs of said shape;

- an increase in the velocity of the medium issuing from tornado towers owing to the use of tornado-type technologies on the boundary surfaces of the towers, of the guide unit, of the fairing, and of the blades of the tornado-type blower and of tornado-type turbine and on other surfaces subjected to flow, as well as owing to the rotation of blower by means of magneto-thermal converter of low-potential energy;
- a reduction within tornado towers of the pressure compensating for the resistance of the tower structures to incoming flow by way of formation in the continuous medium, which fills the tower, of swirling flow independent of the state of continuous medium incident on the tower, for example, in the air during conversion of the wind energy, as well as in other gaseous or liquid media;
- an increase in the degree of environmental protection when using converters of the energy of continuous medium owing to utilization of industrial thermal waste and to the absence of harmful waste and emissions.

The technical result of realization of the proposed method of magneto-thermal conversion of energy includes

- the development of ecologically clean sources of mechanical and electrical energy and/or energy of other types, which would be fully independent of suppliers of organic and nuclear fuel, and the development of electric-energy units, motors, and propelling devices, including those for automobile and water transport, magneto-thermal turbines, compressors, liquid transfer pumps, combined electrical machines, etc.;
- an increase in the efficiency of low-potential heat sources, including the thermal waste of anthropogenic activities, by way of organization of a tornado-type method of heating and cooling that would be adequate to the problem of conversion of magnetic and thermal energy under unsteady heating and cooling of working elements;
- an increase in the efficiency of interaction between the magnetically soft material and the gradient field of permanent magnet owing to the optimal (with respect to the magnitude of energy being converted) choice of the thickness of magnetically soft material, of its mass located in the uniform and gradient parts of the magnet system, and of configuration of the channels in which the magnetically soft material is heated and cooled;
- an increase in the rate of heat and mass transfer between the moving elements of magnetically soft material and the flows of heating and cooling heat-transfer agents as a result of imparting to the surfaces subjected to flow the shapes which provide for the self-organization of tornado-like jets incorporated into the flows of heat-transfer agents;
- an increase, all other things being equal, in the power of conversion of magnetic and thermal energy by way of increasing the rate of motion of the platform with magnetically soft material;
- a reduction of the time of magnetic phase transformations in the magnetically soft working material;
- a reduction of consumption of organic and nuclear fuel owing to commissioning of magneto-thermal converters which utilize as "fuel" inexhaustible natural sources of low-potential energy or waste heat resulting from industrial activities;
- an increase in the efficiency, in the functional and technical-and-economic effectiveness of conventional power engineering owing to recirculation to the production cycle of the energy of low-potential heat dumped by steam and nuclear power plants to the atmosphere and/or water reservoirs.

The technical result of realization of the proposed converter of magneto-thermal energy includes

- an increase in the efficiency of the employed low-potential heat sources by way of organization of tornado-like flows of heat-transfer agents adequate to the problem of conversion of magnetic and thermal energy under unsteady heating and cooling of working elements;
- an increase in the efficiency of interaction between the magnetically soft material and the gradient field of permanent magnet owing to the optimal (with respect to the magnitude of energy being converted) choice of the thickness of magnetically soft material, of its mass located in the uniform and gradient parts of the magnet system, and of configuration of the channels in which the magnetically soft material is heated and cooled;
- an increase in the rate of heat and mass transfer between the moving elements of magnetically soft material and the flows of heating and cooling heat-transfer agents as a result of imparting to the surfaces subjected to flow the shapes which provide for the self-organization of tornado-like jets incorporated into the flows of heat-transfer agents;
- an increase, all other things being equal, in the power of conversion of magnetic and thermal energy by way of increasing the rate of motion of the platform with magnetically soft material;
- a reduction of the time of magnetic phase transformations in the working magnetically soft material;
- a reduction of consumption of organic and nuclear fuel owing to commissioning of magneto-thermal converters which utilize as "fuel" inexhaustible natural sources of low-potential energy or waste heat resulting from industrial activities;
- an increase in the efficiency, in the functional and technical-and-economic effectiveness of conventional power engineering owing to recirculation to the production cycle of the energy of low-potential heat dumped by steam and nuclear power plants to the atmosphere and/or water reservoirs;

- an increase in the level of concentration of power of low-potential heat sources, including the thermal waste of anthropogenic activities, and conversion of this power to full-potential mechanical and/or electrical energy by way of using the effect of self-organization of tornado-like flows and magneto-thermal effects which accompany phase transformations in magnetic bodies and liquids;
- an increase in the efficiency of the magnet system by way of developing two zones of distribution of magnetic field, namely, a zone of gradient field and a zone of uniform field, providing for the optimization of the rates of cooling of magnetically soft material, of the thickness of working elements, and their total mass, which are subjected to cooling and heating in the process of energy conversion, this providing for the attraction of the cooled-down part of magnetically soft material to the zone with the maximal value of magnetic field intensity and for the utilization of the magnetic attraction force for generating mechanical energy and for rotating the guide unit within the tornado tower;
- an increase, owing to the use of tornado-type technologies, in the rate of heat and mass transfer between the moving elements of magnetically soft material and the flows of heating and cooling heat-transfer agents as a result of imparting to the surfaces subjected to flow the shapes which provide for the self-organization of tornado-like jets incorporated into the flows of heat-transfer agents and causing a significant increase in the rate of heat transfer between the flow and the surface;
- an increase in the efficiency of interaction between the magnetically soft material and the gradient field of permanent magnet owing to the optimal (with respect to the magnitude of energy being converted) choice of the configuration of heat-transfer channels and to the use of the tornado-type method of cooling;
- an increase in the degree of environmental protection owing to almost complete absence of harmful waste and emissions.

The technical result of realization of the proposed converter of solar energy for conversion of said energy to heat includes

- an increase in the coefficient of absorption of thermal energy on the surface of solar collectors owing to the utilization of the effect of self-organization of tornado-like vortex structures;
- an increase in heat transfer from the surface receiving the solar energy to the flow of continuous medium - heat-transfer agent;
- a greater independence of the proposed converter compared to prior art units of this type;
- an increase in the degree of environmental protection owing to almost complete absence of harmful waste and emissions.

The technical result of realization of the proposed tornado-type blower includes

- the possibility of the process of tornado-type conversion of energy by varying the intensity of tornado-like flow generated by the blower within the tornado tower;
- the augmentation of energy resources and the environmental protection in virtually all regions of the world by raising the efficiency of utilization of low-potential heat of renewable sources of energy and thermal waste of anthropogenic activities for supporting the operation of the tornado-type blower;
- improvements of the technical-and-economic performance of units employed in nonconventional power generation and of their competitiveness versus conventional methods of power generation.

The technical result of realization of the proposed tornado-type turbine includes

- the highly efficient conversion of the energy of tornado-like jets generated in tornado towers;
- the augmentation of energy resources and the environmental protection in virtually all regions of the world by raising the efficiency of utilization of low-potential heat of renewable sources of energy and thermal waste of anthropogenic activities for supporting the operation of the tornado-type blower;
- improvements of the technical-and-economic performance of units employed in nonconventional power generation and of their competitiveness versus conventional methods of power generation.

The technical result of realization of the method of tornado-type conversion of the energy of continuous medium is attained owing to the fact that the continuous medium from the environment is delivered along a plurality of trajectories into an ax symmetric region $Q_\Sigma$ which has the shape of convergent channel, a height $Z_{out}$, and a height-variable radius

$$R_{\text{in}} \geq R \geq R_{\text{out}},$$

or several nested convergent channels, each having a volume $Q_K$, a height $Z_{K,\text{out}}$, and a height-variable radius $R$ varying in the range:

$$R_{K,\text{in}} \geq R \geq R_{K,\text{out}};$$

in so doing, the $Q_\Sigma$ and $Q_K$ regions have inlet and outlet parts on the boundary surfaces $\Sigma_Q$ and $\Sigma_{QK}$, respectively, and the height and radius of the regions are selected such that the following relations would be valid everywhere on the boundaries $\Sigma_Q$ and $\Sigma_{QK}$ and within the $Q$ region:

$$R_{\text{in}}^2 Z_{\text{in}} = R_{i,\Sigma}^2 Z_{i,\Sigma} = R_{\text{out}}^2 Z_{\text{out}} = \text{const}_\Sigma,$$

$$R_{J,K}^2 Z_{J,K} = \text{const}_J,$$

where the subscript "in" assigned to cylindrical coordinates $Z_{\text{in}}$, $R_{\text{in}}$, $\Psi_{\text{in}}$ indicates that they belong to the inlet part of the boundary surface $\Sigma$, the subscript "out" assigned to cylindrical coordinates $Z_{\text{out}}$, $R_{\text{out}}$, $\Psi_{\text{out}}$ indicates that they belong to the outlet part of the boundary surface E; for the region located within the convergent channel, the subscript "J,K" indicates the position of any $J$th point on the $K$th surface within the volume of convergent channel defined by the surface $\Sigma$, the subscripts "$\Sigma$" and "J" assigned to constants "const" indicate that const$_\Sigma$ belong to the volume $Q_\Sigma$ enclosed within the boundary surface $\Sigma$, and const$_J$ - to the volume $Q_J$ enclosed within each Jth boundary surface of the convergent channel within the $Q_\Sigma$ region; in so doing, the trajectories of the medium moving in the inlet part of the boundary surface $\Sigma$ are directed into the $Q_\Sigma$ region at a local azimuth angle $\Psi_{0\Sigma}$ which defines within the $Q_\Sigma$ region the initial swirling of flow of continuous medium with respect to radius $R_{\text{in}}$ and at local angles of elevation $\alpha_{0\Sigma}$ with respect to the direction of symmetry axis of this region, the selected spatial orientation of said static surfaces providing for the formation of jets the confluence of which in the axisymmetric $Q_\Sigma$ region provides for radial convergence and tornado-like swirling of flow; in so doing, the swirling flow being formed is quasi-potential and moves within the axisymmetric $Q_\Sigma$ region in a channel or channels of convergent shape with the cross section decreasing from the inlet to outlet part to be imparted acceleration which causes an increase in the flow velocity and in the pressure difference between the medium in external space and the medium in the $Q_\Sigma$ region; owing to this, the velocity $U_{\text{in}}$ of flow into this region is increased and the kinetic power of flow is concentrated in the accelerating swirling jet, the maximum of said kinetic power being attained in the $Q_\Sigma$ region; the zone with radius $R_{N\text{max}}$ and longitudinal coordinate $Z_{N\text{max}}$, in which the equality of longitudinal component of velocity $U_Z$ and azimuthal velocity $U_\Psi$ is attained, accommodates the zone of conversion of kinetic power of swirling flow to mechanical power transferred to the turbine shaft; in so doing, the flow of continuous medium which passed said zone loses swirling, gives up a part of its kinetic energy to turbine blades, and decelerates; therefore, a compression zone is located in the $Q_\Sigma$ region in order to compensate for the deceleration of the flow into the space between stationary guide surfaces and the zone of conversion of kinetic power of swirling flow to mechanical power, said compression zone causing an increase in the velocity $U_{\text{in}}$ in this part and, indirectly, in the inlet part of the boundary surface $\Sigma$, as well as an increase in the velocity $U_{\text{out}}$ in the outlet part of the boundary surface E; in so doing, the increase in the velocity $U_{\text{out}}$ with respect to the velocity $U_{\text{in}}$ of the flow into the $Q_\Sigma$ region is defined by the ratio of the radius of the outlet part $R_{\text{out}}$ to the dimensions of the inlet part $Z_{\text{in}}$ of the boundary surface $\Sigma$ transverse with respect to the direction of inward flow,

$$U_{\text{in}}/U_{\text{out}} = R_{\text{out}}/n\, Z_{\text{in}},$$

where $n$ is determined in the $1 \leq n \leq 20$ range, and the radii $R_{\text{in}}$ and $R_{\text{out}}$ of the $Q_\Sigma$ region are determined in the range:

$$1.5 \leq R_{\text{in}}/R_{\text{out}} \leq 7.5;$$

the energy of inflowing continuous medium, the heat of solar radiation and/or of any low-potential source of heat, and the energy stored in the magnetic field of permanent magnets and in magnetically soft materials are used for forming a swirling flow; in so doing, the surfaces of the internal boundary $\Sigma$ of the fairing and of the movable and stationary elements of the guide unit, which are subjected to the flow of continuous medium within the $Q_\Sigma$ region, are formed by recesses (dimples) of double curvature, which are curvilinear quadric surfaces alternating with regions of initially smooth surfaces, with the mating of dimples with initially smooth surfaces being accomplished using the convex parts of their surfaces, the slopes of which have common tangents at all points of mating with the smooth surface and at all points of mating with the concave part of the dimple surface; in so doing, the concave part of dimple is made smooth or with a fairing.

The ratio of depth $h_c$ of dimples to their dimension $L_{LC}$ along the direction of flow is found in the range

$$0.01 \quad \leq h_c/L_{LC} \leq 0.12,$$

and the ratio of longitudinal dimension $L_{LC}$ of dimple to transverse dimension $L_{BC}$ of dimple is in the range

$$0.25 \leq L_{LC}/L_{BC} \leq 1,$$

with the surface density $f$ of dimples found in the range:

$$0.05 \leq f \leq 0.785,$$

where the subscripts LC and BC indicate the longitudinal and transverse dimensions along and across the flow, respectively.

The velocity of tornado-like swirling flow in the inlet part of boundary $\Sigma$ of region $Q$ and at any $K$-th point on the $J$-th surface within this region is defined by the relations

$$U_{in} = (U_{\Psi\Sigma}{}^2 + U_{Z\Sigma}{}^2 + U_{R\Sigma}{}^2)^{0.5} \quad \text{and} \quad U_{J,K} = (U_{\Psi,J,K}{}^2 + U_{Z,J,K}{}^2 + U_{R,J,K}{}^2)^{0.5},$$

respectively; in so doing, the local angle of elevation $\alpha_{0\Sigma}$ and the local azimuth angle $\Psi_0$ are defined by the relations:

$$\alpha_{0\Sigma} = \text{arc cos } (U_{Z,in}/U_{\Sigma,in}) \quad \text{and} \quad \Psi_0 = \text{arc tan}(U_{\Psi,\Sigma}/U_{R,\Sigma}),$$

respectively; in so doing, the angle $\alpha_{0\Sigma}$ is formed by a guide surface which contacts the surface $\Sigma$ or surfaces $\Sigma_J$ at the point (points) of its (their) contact with the boundary surface of convergent channel on the longitudinal coordinate $Z$ in the range:

$$Z_{in} \leq Z \leq nZ_{in},$$

where $n$ varies in the range $1.25 \leq n \leq 3.5$, which provides for the formation in the selected region $Q$ of a tornado-like quasi-potential swirling flow with the velocity components on the boundary $\Sigma$ and within the region being defined by the following relations:

- along the radius of region $Q$ on the boundary $\Sigma$:

$$U_{R,\Sigma} = -C_0(t)R_{in},$$

- at any $K$-th point of the $J$-th surface within the selected region $Q$:

$$U_{R,J,K} = -C_0(t)R_{J,K};$$

- along the region $Q$ on the boundary $\Sigma$:

$$U_{Z,in} = 2C_0(t)Z_{in},$$

at any $K$-th point of the $J$-th surface within the selected region $Q$:

$$U_{Z,J,K} = 2C_0(t)Z_{J,K};$$

on the azimuth of region $Q$ on the boundary $\Sigma$:

$$U_{\Psi\Sigma} = (\Gamma_0(t)/2\pi R_{in})[1 - \exp(-C_0(t)R_{in}^2/2\nu)],$$

at any $K$th point of the $J$th surface within the selected region $Q$:

$$U_{\Psi\Sigma} = (\Gamma_0(t)/2\pi R_J)[1 - \exp(-C_0(t)R_J^2/2\nu)],$$

where $\Gamma_0(t)$ is the time-dependent circulation of the medium in tornado-like vortex; in so doing, the swirling flow radially converges on the symmetry axis of region $Q$ as the radius $R_{J,K}$ of said region decreases, including the point $R_{in}$ on the boundary surface $\Sigma$, which is indicated by the sign of minus in the time-dependent expression for radial gradient of velocity of tornado-like flow $C_0(t) = -(U_{R,\Sigma}(t)/R_{in})$; in so doing, $C_0(t)$ and $\Gamma_0(t)$ vary following the variation in time of the velocity $U_{in}$ of the flow into the region $Q$, and the power of the formed tornado-like quasi-potential jet increases proportionally with $N_{out} \sim U_{out}^3$ with the energy balanced between its concentrated amount in the formed tornado-like flow and the energy of the medium flowing into the region $Q$ via boundary surface $\Sigma$.

The technical result of realization of the proposed tornado-type converter of energy (alternative embodiment 1) is attained owing to the fact that said converter includes

- an ax symmetric convergent tornado tower equipped with
- receivers of flows of continuous medium,
- an internal ax symmetric convergent fairing located along the symmetry axis of the tower,
- a stationary guide unit with blades arranged about the symmetry axis of the tower and rigidly connected with the external convergent surface of the tower and with the fairing,
- an upper rotating power shaft and a lower rotating power shaft, the symmetry axes of which coincide with the symmetry axis of the tower,
- a tornado-type blower mounted above said stationary guide unit,
- at least one tornado-type turbine which is rigidly connected with said upper power shaft and mounted along the symmetry axis of the tower in a zone of radius $R_{Nmax}$ and longitudinal coordinate $Z_{Nmax}$, in which zone the equality of the longitudinal, $U_Z$, and azimuthally, $U_\psi$, components of velocity is attained;
- converters of solar energy;
- a tornado-type converter of magneto-thermal energy, which is located beneath said stationary guide unit, has a common symmetry axis with the tornado tower, and is provided with
- a magnet system comprising a gradient magnet and a magnet with uniform magnetic field,
- a movable power disk which carries a magnetically soft working material and channels serving the function of the guide unit of tornado-type system of heating and cooling of magnetically soft material,
- a power shaft rigidly connected with said power disk and with the converter fairing and tornado-type blower in the tornado tower,
- a tornado-type system of heating and cooling of magnetically soft working material, which is mounted beneath said stationary guide unit provided with blades about the symmetry axis of the tornado-type converter and rigidly connected with the rotating power shaft,
- a tornado-type pump,
- at least one tornado-type turbine in the system of tornado-type cooling for converting the energy of tornado-like jet of heat-transfer agent;
- base-mounted supports and load-bearing structures;
- in so doing, said axisymmetric convergent tornado tower consists of at least one convergent channel with height-variable radius $R$ and is a body of volume $Q$ open into environment in the tower zones of maximal and minimal radii, with the continuous medium entering and leaving the tower via said zones, respectively; in so doing, the tower has a height $Z$ and inner boundary surface $\Sigma$, the shape of which corresponds to quadratic hyperbola so that the geometric dimensions of the tower at its any height and in its any internal cross section are related by the relation

$$R^2 Z = \text{const};$$

in so doing, the surfaces of the convergent tower, of the external boundary of the fairing, of the stationary elements of the guide unit with blades, and of the blades of tornado-type turbines, which are subjected to the flow of continuous medium within the $Q$ region, are made smooth or have the form of alternating smooth surface segments and curvilinear segments in the form of recesses (dimples) of double curvature on the surface, which consist of mating quadric surfaces forming convex and concave slopes, with the mating of dimples with smooth surfaces being accomplished using the convex slopes of the dimples, which have common tangents at all points of mating with the smooth surface and with the surface of the concave part of the dimple; in so doing, the concave part of dimple is made smooth or with a fairing.

The ratio of depth $h_c$ of dimples, reckoned from the level of initially smooth surface, to their dimensions $L_{LC}$ along the direction of flow is found in the range:

$$0.01 \quad \leq h_c/L_{LC} \leq 0.5,$$
$$0.02$$

and the ratio of longitudinal dimension $L_{LC}$ of dimple to transverse dimension $L_{BC}$ of dimple is in the range:

$$0.25 \leq L_{LC}/L_{BC} \leq 1,$$

with the surface density $f$ of dimples found in the range:

$$0.1 \quad \leq f \leq 0.785,$$

where the subscripts LC and BC indicate the longitudinal and transverse dimensions along and across the flow, respectively.

The axisymmetric fairing is mounted along the symmetry axis of tornado tower; in so doing, the fairing is a body of revolution, the projection of which onto a longitudinal-and-radial plane ($R, Z$) has the shape of quadratic hyperbola defined by the relation:

$$R_{J,F}^2 Z_{J,F} = \text{const}, \quad J = 0, 1, 2, 3, \ldots, n,$$

where $R_{J,F}$ and $Z_{J,F}$ denote the fairing radius and height, respectively, and the ratio of maximal radius of outer boundary surface of the fairing $R_{n,F}$ to maximal radius of the tower $R_{in}$ lies in the range:

$$0.03 \quad \leq (R_{n,F}/R_{in}) \leq 0.3;$$

in so doing, the fairing has an opening, the center of which lies on the symmetry axis of the tower and is mated with the power disk.

The guide unit of tornado tower has blades, the shape of which is defined by the following relations:

in the longitudinal-and-radial plane ($R, Z$):

-   along the radius of tornado tower on the boundary $\Sigma$,

$$Z_\Sigma R_\Sigma^2 = \text{const},$$

-   at any $K$-th point of the $J$-th surface within the selected region $Q$:

$$Z_{K,J}R_{K,J}{}^2 = \text{const}, \quad J = 0, 1, 2, 3, \ldots, n, K = 0, 1, 2, 3, \ldots, m;$$

in the azimuthal-and-radial plane ($\Psi$, $R$):

- on the azimuth of tornado tower on the boundary $\Sigma$:

$$\Psi_\Sigma = \text{arc tan}(U_{\Psi,\Sigma}/U_{R,\Sigma}),$$

- at any $K$th point of the $J$th surface within the selected region $Q$:

$$\Psi = \Psi_\Sigma + (U_{\Psi,\Sigma}/2U_{R,\Sigma})[(R_{in}/R_{K,J})^2 - 1], \qquad J = 1, 2, 3, \ldots, n, \ K = 0, 1, 2, 3, \ldots, m,$$

where $R$, $Z$, and $\Psi$ are cylindrical coordinates of tornado tower, $U$ is the velocity of flow of continuous medium; the subscripts "$\Sigma$", "in", and "K,J", "$\Psi$, $\Sigma$", "R, $\Sigma$", "Z, $\Sigma$" assigned to coordinates point to their belonging to the inner boundary surface $\Sigma$ of tornado tower and to any $K$-th point of the $J$-th surface within the selected region $Q$, and the subscripts "$\Psi$, $\Sigma$", "R, $\Sigma$", and "Z, $\Sigma$" assigned to velocities correspond to the values of azimuthal, longitudinal, and radial velocity, respectively; in so doing, the radial component of velocity $U_{R,\Sigma}$ determined on the boundary $\Sigma$ is related to the geometric dimensions of the region of formation of flow and is defined by the equation:

$$U_{R,\Sigma} = (U_{\Psi\Sigma}{}^2 + U_{Z,\Sigma}{}^2 + U_{R,\Sigma}{}^2)^{0.5}/\{1 + (2Z_{in}/R_{in})^2 + (\Gamma_0/2\pi R_{in})[1 - \exp(-U_{R,\Sigma}R_{in}/2\nu)]^2\}^{0.5}.$$

The technical result of realization of the proposed tornado-type converter of energy (alternative embodiment 2) is attained owing to the fact that said converter includes:

- an axisymmetric convergent tornado tower consisting of at least two axisymmetric convergent channels (outer and inner ones), with the outer convergent channel of the tornado tower being made of an optically transparent material, having a height $Z_{opt}$ and inner boundary surface $\Sigma$, the shape of which corresponds to quadratic hyperbola so that the geometric dimensions of the tower at its any height $Z_{i,opt}$ and in its any internal ith cross section of radius $R_{i,opt}$ are related by the relation:

$$R_{i,opt}{}^2 Z_{i,opt} = \text{const}_{opt},$$

where $\text{const}_{opt}$ is common to all points on the inner surface of the outer convergent channel, and the inner convergent channel is made of a material exhibiting a high value of coefficient of absorption of solar radiation and serves for heating the medium in the space between the outer and inner convergent channels and, indirectly, within the inner convergent channel; in so doing, the solar radiation is directed onto the optically transparent convergent channel directly and/or by means of concentrators of solar radiation in the form of mirrors, and/or by means of concentrators provided on the optically transparent boundary surface $\Sigma_{opt}$ of outer convergent channel in the form of recesses (dimples); in so doing, said dimples are imparted the shape of quadric surfaces of double curvature, and the surfaces of the convergent channels, of the inner fairing, of the stationary elements of the guide unit, of the tornado-type blower, and of the blades of tornado-type turbines, which are subjected to the flow of continuous medium within the Q region, are made smooth or have the form of alternating smooth segments of the initial surface and curvilinear segments in the form of recesses (dimples) of double curvature, which consist of mating quadric surfaces forming convex and concave slopes, with the mating of dimples with smooth surface segments being accomplished using the convex slopes of the dimples, which have common tangents at all points of mating with the smooth surface and with the surface of the concave part of the dimple; in so doing, the concave part of dimple is made smooth or with a fairing, and the tower is equipped with:
- receivers of incoming flows of continuous medium,
- an internal axisymmetric convergent fairing located along the symmetry axis of the tower,
- a stationary guide unit with blades arranged about the symmetry axis of the tower and rigidly connected with the fairing and with the surface of the convergent channels;
- converters of solar energy, which consist of

- a system for heating the continuous medium confined between the optically transparent boundary surface of the outer convergent channel and the solar heat-absorbing surface of the inner convergent channel,
- solar heaters of the heat-transfer agent,
- solar batteries for direct conversion of solar radiation to electricity;
- a tornado-type converter of magneto-thermal energy, which is provided with
- a magnet system comprising a gradient magnet and a magnet with uniform magnetic field,
- a movable power disk which carries a magnetically soft working material and the guide unit of tornado-type system of heating and cooling of magnetically soft material,
- a power shaft rigidly connected with said power disk, with the fairing of tornado-type converter, and with the blower in the tornado tower,
- a tornado-type system of heating and cooling of magnetically soft working material, which is mounted beneath said stationary guide unit provided with blades about the symmetry axis of the tornado-type converter,
- a tornado-type pump,
- at least one tornado-type turbine in the system of tornado-type cooling for converting the energy of tornado-like jet of heat-transfer agent;
- base-mounted supports and load-bearing structures.

The axisymmetric convergent channels of the tornado tower have height-variable radii R, are open into environment at the tower base in the zone of maximal radius and at the uppermost point of the tower, where the convergent channel radius is minimal, with the continuous medium entering and leaving the convergent channel assembly via said zones, respectively.

The ratio of depth $h_c$ of dimples, reckoned from the level of initially smooth surface, to their dimensions $L_{LC}$ along the direction of flow is found in the range:

$$0.01 \quad \leq h_c/L_{LC} \leq 0.5,$$

and the ratio of longitudinal dimension $L_{LC}$ of dimple to transverse dimension $L_{BC}$ of dimple is in the range:

$$0.25 \leq L_{LC}/L_{BC} \leq 1.25,$$

with the surface density $f$ of dimples found in the range:

$$0.1 \leq f \leq 0.785.$$

The axisymmetric fairing is mounted along the symmetry axis of tornado tower; in so doing, the fairing is a body of revolution, the projection of which onto a longitudinal-and-radial plane $(R,Z)$ has the shape of quadratic hyperbola defined by the relation:

$$R_{J,F}^{2}Z_{J,F}=\text{const}, \quad J=0,1,2,3,\ldots,n,$$

where $R_{J,F}$ and $Z_{J,F}$ denote the fairing radius and height, respectively, and the ratio of maximal radius of external boundary surface of the fairing $R_{n,F}$ to maximal radius of the tower $R_{in}$ lies in the range:

$$0.1 \leq (R_{n,F}/R_{in}) \leq 0.3;$$

in so doing, the fairing has an opening, the center of which lies on the symmetry axis of the tower and through which passes a power shaft connecting the blower rotor with the power disk of tornado-type converter of low-potential heat to mechanical power.

The guide unit of tornado tower has blades, the shape of which is defined by the following relations:

in the longitudinal-and-radial plane $(R, Z)$:

- along the radius of tornado tower on the boundary $\Sigma$:

$$Z_\Sigma R_\Sigma{}^2 = \text{const},$$

- at any $K$-th point of the $J$-th surface within the selected region $Q$:

$$Z_{K,J} R_{K,J}{}^2 = \text{const}, \qquad J = 0, 1, 2, 3, \ldots, n, \quad K = 0, 1, 2, 3, \ldots, m;$$

in the azimuthal-and-radial plane $(\Psi, R)$ :

- on the azimuth of tornado tower on the boundary $\Sigma$:

$$\Psi_\Sigma = \text{arc tan}\,(U_{\Psi,\Sigma}/U_{R,\Sigma}),$$

- at any $K$-th point of the $J$-th surface within the selected region $Q$:

$$\Psi = \Psi_\Sigma + (U_{\Psi,\Sigma}/2U_{R,\Sigma})[(R_{in}/R_{K,J})^2 - 1], \qquad J = 1, 2, 3, \ldots, n, K = 0, 1, 2, 3, \ldots, m,$$

where $R$, $Z$, and $\Psi$ are cylindrical coordinates of tornado tower, U is the velocity of flow of continuous medium; the subscripts "$\Sigma$", "$\Psi, \Sigma$", "R, $\Sigma$", "Z, $\Sigma$", "in", and "K,J" indicate the coordinates and velocities on the inner boundary surface $\Sigma$ of tornado tower and at any $K$th point of the $J$th surface within the selected region $Q$, respectively; in so doing, $U_{R,\Sigma}$ is related to the geometric dimensions of the region of formation of flow and is defined by the equation:

$$U_{R,\Sigma} = (U_{\Psi,\Sigma}{}^2 + U_{Z,\Sigma}{}^2 + U_{R,\Sigma}{}^2)^{0.5} / \{1 + (2Z_{in}/R_{in})^2 + (\Gamma_0/2\pi R_{in})[1 - \exp(-U_{R,\Sigma}R_{in}/2\nu)]^2\}^{0.5}.$$

The technical result of realization of the proposed converter of solar energy is attained owing to the fact that said converter includes a hermetic housing with channels provided therein side; in so doing, the housing is heat-insulated on all sides, except for the side coated with one or several layers of optically transparent heat insulation, on which the solar radiation flux is incident, with the blackened metal outer surface of channels which takes up solar radiation being made either of smooth or shaped plates or of pipes; in so doing, a heat-transfer agent heated by solar radiation is passed in the thus formed channels; for this purpose, the outer surfaces of channels and the surfaces of optically transparent insulation facing the inside of the hermetic housing are imparted the shape of alternating segments of curvilinear quadric surface in the form of recesses (dimples) of double curvature and initially smooth segments, which consist of mating convex and concave parts of the dimples, with the mating of dimples with smooth surface segments being accomplished using the convex parts of the dimples, the slopes of which have common tangents at all points of mating with the smooth surface and with the surface of the concave part of the dimple; in so doing, the concave part of dimple is made smooth or with a fairing.

The ratio of depth $h_c$ of dimples on the channel surface to their dimension $L_{LC}$ along the direction of flow is found in the range:

$$0.01 \quad \leq h_c/L_{LC} \leq 0.3,$$

and the ratio of longitudinal dimension $L_{LC}$ of dimple to transverse dimension $L_{BC}$ of dimple is in the range:

$$0.25 \leq L_{LC}/L_{BC} \leq 1,$$

with the dimples arranged on the surface with density $f$ found in the range:

$$0.05 \leq f \leq 0.5,$$

and the ratio of depth $h_c$ of dimples on the optically transparent surface to their diameter $d_c$ is in the range:

$$0.01 \leq h_c/d_c \leq 0.5,$$

with the dimples arranged on the surface with density $f$ in the range:

$$0.1 \leq f \leq 0.785.$$

The technical result of realization of the proposed method of magneto-thermal conversion of energy stored in permanent magnetic fields, in magnetically soft materials, and in low-potential heat fluxes is attained owing to the fact that a magnetically soft material of density $\rho$, thermal conductivity $\lambda$, heat capacity C, and magnetization $\sigma(T, B)$ dependent on temperature $T$ and on induction of external magnetic *field B* is placed in an external magnetic field generated by a magnet system, in which the field induction is varied in the preassigned direction $X$ from the minimal to maximal value to form the field gradient $dB/dX \neq 0$, and by a magnet in which the magnetic field is uniform $((dB/dX) = 0)$ and has the intensity $B = B_{max}$ which is maximal for the selected permanent magnet; in so doing, a layer of magnetically soft material of thickness $\delta = \rho_S/\rho$ in the form of plates, cylinders, and/or other three-dimensional shapes, which are located on a substrate of heat-insulating nonmagnetic material linearly or in a circle with constant surface density $\rho_S$, is heated in the zone with $dB/dX \neq 0$ and cooled in the zone with $dB/dX = 0$ to accomplish a magnetic phase transition from the ferromagnetic to paramagnetic state under heating and from the paramagnetic to ferromagnetic state under cooling, thereby providing for the attraction of the cooled mass of magnetically soft material $m_{cold}$ to the zone where the magnetic field induction is maximal and for the expulsion from this zone of the heated mass of magnetically soft material $m_{hot}$ which made a transition to the paramagnetic state, whereby the continuity of delivery of magnetically soft material into the zone with $dB/dX \neq 0$ is attained and the translational or circular motion of the mass of magnetically soft material is provided, which converts the power of magnetic attraction to mechanical power or to power of other forms; in so doing, the heating and cooling of the mass of magnetically soft material is accomplished by turbulent flows of heat-transfer agents or by flows of heat-transfer agents with built-in self-organizing tornado-like jets which flow past the surfaces of layers of magnetically soft material, with the surfaces subjected to flow being made smooth or, for the purpose of intensifying the heating and/or cooling, being shaped by a relief in the form of alternating initially smooth segments and segments with curvilinear quadric surface in the form of recesses (dimples) of double curvature, which consist of mating convex and concave parts, and the mating of dimples with initially smooth surface is accomplished using the convex part of the surface, the slopes of which have common tangents at all points of mating with the initially smooth surface and with the concave bottom part of the dimple surface; in so doing, the concave part of dimple is made smooth or with a fairing.

The technical result of realization of the proposed tornado-type converter of magneto-thermal energy is attained owing to the fact that the converter comprises a magnet system with a set of permanent magnets of different magnetic field intensities and magnetic circuits arranged so that the magnetic field intensity varies from the minimal value at the inlet to the magnet to the maximal value at the end of the field, and a magnetically soft material located in channels formed between a disk made of nonmagnetic heat-insulating material and a coaxial ring of the same material and with outside radius equal to that of the disk; in so doing, the magnetically soft material is arranged in the form of plates of height $h_M$ and thickness $\delta_M$ vertically between the disk and the ring to serve the function of the side walls of channels rotating together with the disk in the magnetic field of gradient magnet. The converter is provided with a hydraulic system of tornado-like cooling and heating with a tornado-type pump comprising an axisymmetric stationary tornado-type convergent channel, any longitudinal cross section of which containing the symmetry axis of the convergent channel is a quadratic hyperbola for which the equality $Z_i R_i^2 = const_P$ is valid in any transverse cross section with longitudinal coordinate $Z_i$ and radius $R_i$ corresponding to said coordinate; in so doing, the guide unit of the hydraulic system of tornado-like cooling and heating of magnetically soft material comprises stationary nozzles, movable blades, and a fairing, with the side walls of channels with the working magnetically soft material in the initial section of the blades being a constituent part of the surface of said blades; in so doing, all surfaces subjected within the stationary tornado-type convergent channel to flow by nominally cold and nominally hot heat-transfer agents, including the surfaces of plates of magnetically soft material, have a relief in the form of alternating initially smooth segments and segments with curvilinear quadric surface in the form of recesses (dimples) of double curvature, which consist of convex and concave parts of the curvilinear surface of dimples mating with one another and with initially smooth surface by means of the convex part of relief, the slopes of which have common tangents at all points of mating with the initially smooth surface and with the concave bottom part of the dimple surface; in so doing, the concave part of dimple is made smooth or with a fairing.

The converter comprises a system for tornado-like cooling and heating of the magnetically soft material with a system for recycling of water into the environment after its utilization and decrease in its temperature upon the mixing of heating and cooling streams; in so doing, the energy and temperature characteristics of the heating and cooling streams delivered from the stationary nozzles to the channels for heating and cooling of said material, which are located on a rotating disk of nonmagnetic heat-insulating material, provide for magnetic phase transitions in the selected magnetically soft working material, with the shape of the boundary surfaces of nozzles and of the movable channels mated with said surfaces and receiving the streams of heat-transfer agent being defined by the following relations:

- in the longitudinal-and-radial plane ($Z, R$):

$$-Z_{JM}R_{JM}{}^2 = \text{const}_M, \qquad J = 0, 1, 2, 3, \ldots, n, \ M = 0, 1, 2, 3, \ldots, m;$$

- in the azimuthal-and-radial plane ($\Psi, R$):

$$\Psi_M = \Psi_{\Sigma M} \pm (U_{\Psi,\Sigma,M}/2U_{R,\Sigma,M})[(R_{\text{in},M}{}^2/R_{J,M}{}^2) - 1], J = 1,2,3, \ldots, n, M = 0,1,2,3, \ldots, m;$$

the sign of minus with coordinate $Z$ in the longitudinal-and-radial plane ($Z, R$) is indicative of the direction of swirling flow toward negative values of coordinate $Z$ in the selected alternative embodiment of tornado-type converter, i.e., below the base of tornado tower, and the $\pm$ sign in the expression for $\Psi_M$ in the azimuthal-and-radial plane ($\Psi, R$) points to the possibility of selecting any direction of rotation both counterclockwise (the plus sign) and clockwise (the minus sign).

The spatial orientation of the symmetry axis of each stationary nozzle is conjugate with the spatial orientation of the symmetry axis and shape of movable channels with magnetically soft material and has the following form in the cylindrical coordinates:

- in the longitudinal-and-radial plane ($Z, R$):

$$(\pm Z_{J,M}R_{J,M}{}^2) = \text{const}, \qquad J = 0, 1,2,3,\ldots n, \quad M = 0,1,2,3, \ldots, m;$$

- in the azimuthal-and-radial plane ($\Psi, R$):

$$\Psi_M = \Psi_{\Sigma M} \pm (U_{\Psi,\Sigma,M}/2U_{R,\Sigma,M})[(R_{\text{in},M}{}^2/R_{J,M}{}^2) - 1], J = 1,2,3, \ldots, n, M = 0,1,2,3, \ldots, m;$$

the $\pm$ sign with coordinate $Z$ in the expression for const in the longitudinal-and-radial plane ($Z, R$) is indicative of the possibility of selecting any direction of tornado-like flow toward either negative or positive values of axis $Z$; for coordinate $\Psi_M$ in the azimuthal-and-radial plane ($\Psi, R$), the $\pm$ sign likewise points to the possibility of selecting any direction of rotation both counterclockwise (the plus sign) and clockwise (the minus sign).

The magnet systems are located at least at two opposite points on the disk diameter so that the magnetically soft material is cooled down in the magnetic field of gradient magnet by means of stationary nozzles mounted in a zone taking up the space between the segment with minimal magnetic field intensity $H \sim H_{\min}$ and the segment with magnetic field intensity $H \sim 0.95H_{\max}$, and the heating of the working medium is provided by stationary nozzles located inside of the gradient magnet and taking up the space between the zone of magnetic field intensity of $H \sim 0.95H_{\max}$ and the zone in which the magnetic field intensity is uniform and reaches a maximum $H \sim H_{\max}$.

The cooling and heating of magnetically soft material in the converter is accomplished using either a heat pump or any natural source of low-potential energy, for example, a collector of filtered nominally cold water of creeks, rivers, or fresh-water lakes and a collector of nominally hot water of any origin, for example, water heated in solar collectors, water of geothermal sources or thermal waste of anthropogenic activities such as nominally hot water cooled down in a cooling tower, heat-transfer agent heated by low-potential heat of flames of petroleum- and gas-processing, and other low-potential sources.

The ratio of depth $h_c$ of dimples to their dimension $L_{LC}$ along the direction of flow is found in the range:

$$0.01 \leq h_c/L_{LC} \leq 0.1,$$

and the ratio of longitudinal dimension $L_{LC}$ of dimple to transverse dimension $L_{BC}$ of dimple is in the range:

$$0.25 \le L_{\mathrm{LC}}/L_{\mathrm{BC}} \le 1.$$

The technical result of realization of the proposed tornado-type blower is attained owing to the fact that the blower comprises a stationary body, a rotor accommodated by the stationary body and having blades of longitudinal dimension $Z$ and radius $R$ variable along the blower axis, the shape of the inner boundary surface of said body in the cylindrical coordinate system being defined by the relation:

$$Z_{\mathrm{body}} R_{\mathrm{body}}{}^2 = \mathrm{const}_{\mathrm{body}};$$

in so doing, the blower blades, the inner side surface of the body, and the rotor surface form channels which communicate with environment at the blower ends, and the shape and spatial orientation of the blades in cylindrical coordinates associated with the rotation axis of the rotor are defined by the relation:

$$f(r, z) = f(r, z_{\mathrm{in}}) + (V_{\mathrm{z\pm}}/V_{\mathrm{zp}})[r_{\mathrm{c}} z^2/2 z_{\mathrm{fp}} r^2 - k_{\omega \mathrm{p}}(z/r_{\mathrm{c}})],$$

where:

- *r, z,* and *f* are current cylindrical coordinates, the longitudinal axis $Z$ of which coincides with the symmetry axis of the tower;
- $f(r, z_{\mathrm{in}})$ is the current azimuthal coordinate which defines the angle between the tangent to the blade wake and the current radius of the blower on the plane crossing the blower blades and, on the normal, the rotation axis of the blower; in so doing, the continuous medium flows into interblade channels via the plane crossing the blades at longitudinal coordinate $Z = Z_{\mathrm{in}}$, and the rotation axis of the blower coincides with the longitudinal coordinate axis $Z$;
- $r_{\mathrm{c}}$ is the blower radius;
- $z_{\mathrm{fp}}$ is the coordinate of normal cross section of the rotation axis of the blower by the plane via the surface of which the continuous medium flows into the interblade space of the blower;
- $k_{\omega \mathrm{p}}$ is the rpm coefficient corresponding to the maximal value of power transferred by the blower blades to the tornado-like flow being formed;
- $V_{\mathrm{z\pm}}$ is the longitudinal velocity of the medium flowing into the blower; and
- $V_{\mathrm{zp}}$ is the longitudinal velocity of the medium flowing out from the blower;

in so doing, the inner surface of the body and the surface of the blades are made smooth or have the form of alternating segments of initially smooth surface and curvilinear segments in the form of recesses (dimples) of double curvature, which consist of mating quadric surfaces forming convex and concave slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing.

The technical result of realization of the proposed tornado-type turbine is attained owing to the fact that the turbine comprises a stationary body, a rotor accommodated by the stationary body and having blades of longitudinal dimension Z and radius R variable along the turbine axis, the shape of the inner boundary surface of said body in the cylindrical coordinate system being defined by the relation:

$$Z_{\mathrm{bodyi}} R_{\mathrm{body}}{}^2 = \mathrm{const}_{\mathrm{body}};$$

in so doing, the turbine blades, the inner side surface of the body, and the outer surface of the rotor form interblade channels which communicate with environment at the turbine ends, and the shape and spatial orientation of said channels in cylindrical coordinates associated with the rotation axis of the turbine are defined by the relation

$$\varphi(r, z) = \varphi(r, z_{\mathrm{in}}) + (r_{\mathrm{c}} z/r^2)(1 - z/2 z_{\mathrm{out}}) - k_{\omega}(z/r_{\mathrm{c}}),$$

where

- $r, z$, and φ are current cylindrical coordinates, the longitudinal axis $Z$ of which coincides with the symmetry axis of the tower;
- $φ(r, z_{in})$ is the current azimuthal coordinate which defines the angle between the tangent to the blade wake and the current radius of the turbine on the plane crossing the blower blades and, on the normal, the rotation axis of the turbine; in so doing, the continuous medium flows into the interblade channels via the plane crossing the blades at longitudinal coordinate $Z = Z_{in}$, and the rotation axis coincides with the longitudinal coordinate axis $Z$;
- $φ(r, z_{out})$ is the azimuthal coordinate of the section of the turbine blades at height $Z_{out}$ by the plane crossing on the normal the rotation axis of the turbine via the surface of which plane the continuous medium flows out from the interblade channels of the turbine into the tower above the turbine;
- $r_c$ is the turbine radius; and
- $k_ω$ is the rpm coefficient corresponding to the maximal value of power transferred by the tornado-like flow to the turbine blades.

The inner surface of the body and the surfaces of the blades and of the rotor, which interact with the continuous medium, are made smooth or with a relief in the form of segments of initially smooth surface alternating with curvilinear segments in the form of recesses (dimples) of double curvature, which consist of mating quadric surfaces forming convex and concave slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing.

BRIEF DESCRIPTION OF DRAWINGS

Fig. 1. The line diagram of the tornado-type energy converter (alternative embodiment 1) realizing the proposed method.
Fig. 2. The line diagram of the tornado-type energy converter (alternative embodiment 2) realizing the proposed method.
Fig. 3. A fragment of the surface shaped by a dimple of double curvature.
Fig. 4. Hodograph of motion.
Fig. 5. A side view of the tornado-type turbine.
Fig. 6. A front view of the tornado-type turbine.
Fig. 7. A side view of the tornado-type blower.
Fig. 8. A front view of the tornado-type blower.
Fig. 9. A fragment of the tornado tower of the converter according to alternative embodiment 2.
Fig. 10. The converter of solar energy.
Fig. 11. Schematic of the magnet system of the converter of magneto-thermal energy.
Fig. 12. A fragment of a channel with magnetically soft material.

DESCRIPTION OF EMBODIMENTS

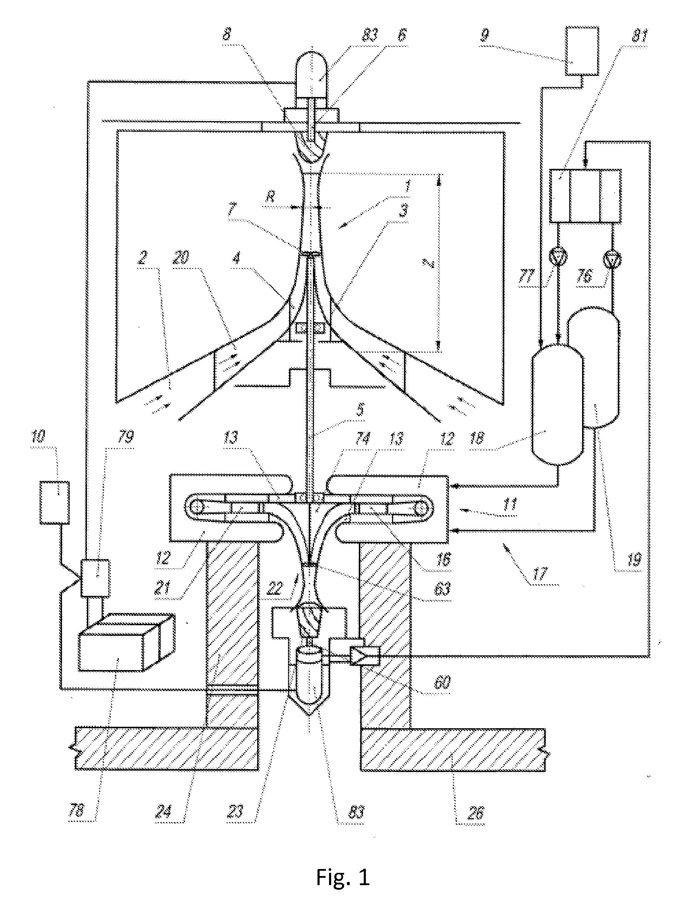

The tornado-type converter of energy of continuous medium (alternative embodiment 1, Fig. 1) comprises at least one axisymmetric convergent tornado tower *1* equipped with receivers *2* of flows of continuous medium, with a fairing *3,* with a stationary guide unit *4* with blades arranged about the symmetry axis of the tower *1* and rigidly connected with the outer convergent surface of said tower and with the fairing, with a lower rotating power shaft *5* and an upper rotating power shaft *6,* the symmetry axes of said shafts coinciding with the symmetry axis of the tower *1*; with at least one tornado-type blower *7* mounted along the symmetry axis of the tower *1* above said stationary guide unit *4* and rigidly connected to the lower power shaft *5*; and with at least one tornado-type turbine *8* which is mounted along the symmetry axis of the tower *1* and is rigidly connected to the upper power shaft *6.*

The tornado-type converter of energy of continuous medium further comprises at least one converter of solar radiation *9* designed to utilize the solar radiation for heating the heat-transfer agent and at least one converter of solar radiation *10* designed to utilize the solar radiation for generating electrical power.

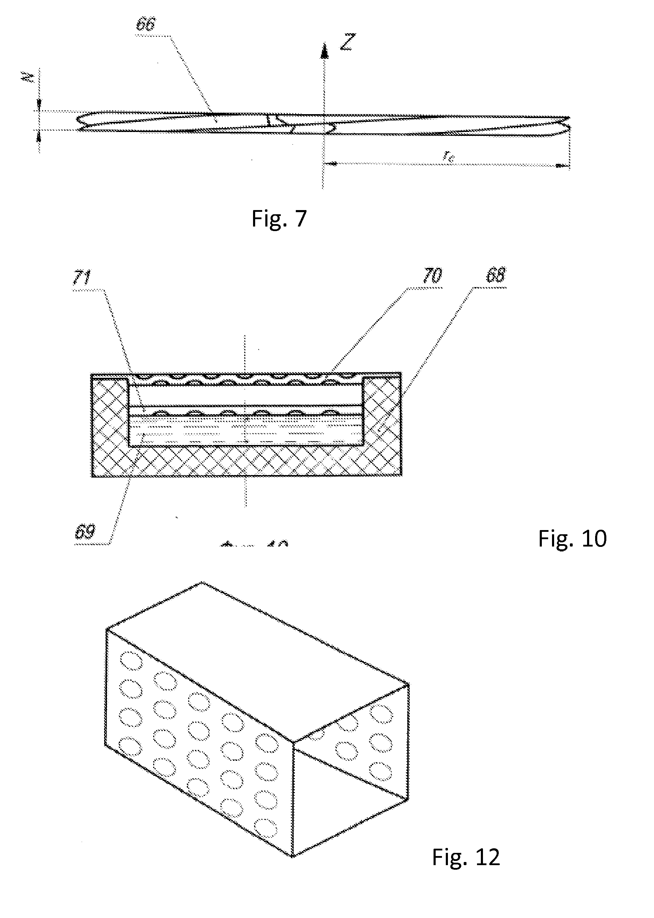

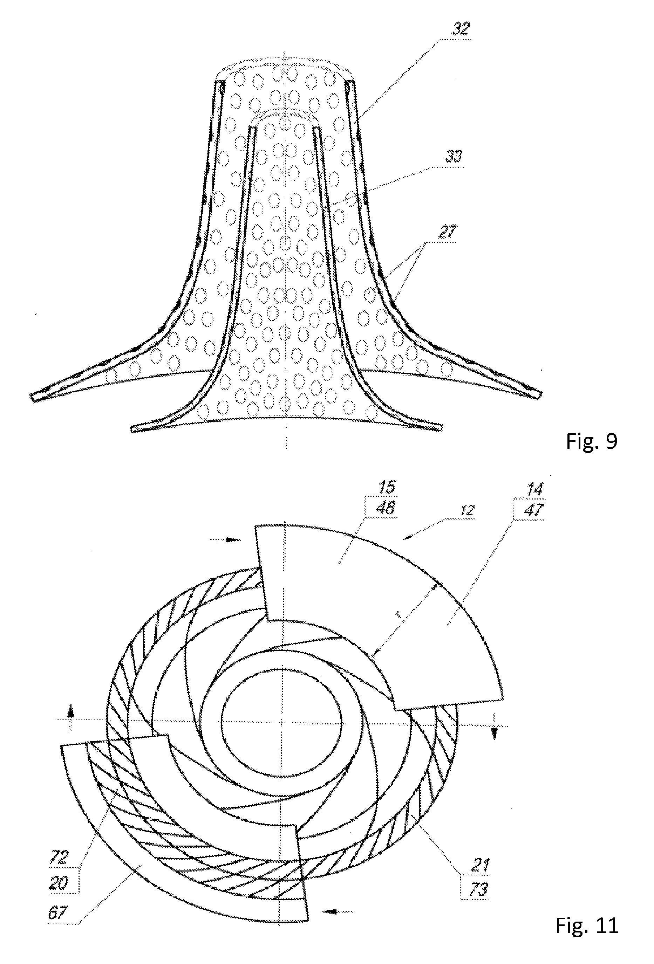

The tornado-type converter of energy of continuous medium also comprises a tornado-type magneto-thermal converter *11* designed to utilize low-potential thermal energy and the energy stored in magnetic field and equipped with a magnet system *12* (Figs. 1 and 11) with a gap *13* (Fig. 1) consisting of a magnet *14* (Fig. 11) generating a gradient magnetic field and a magnet *15* (Fig. 11) generating a uniform magnetic field, said magnets *14* and *15* located beneath the stationary guide unit *4* along the symmetry axis of the convergent tornado tower *1*; a movable power disk *16* which carries a magnetically soft working medium, is mounted in the gap of the magnet system *12,* and is rigidly connected by the lower rotating power shaft *5* to the tornado-type blower *7* within the tornado tower *1*. The converter *11* is equipped with a tornado-type system *17* of heating and cooling of magnetically soft working medium, which has service lines delivering a nominally hot heat-transfer agent *18* and a nominally cold heat-transfer agent *19* to the power disk *16*; with a system of stationary nozzles *20* (Fig. 11) which deliver the nominally hot and nominally cold heat-transfer agents to movable channels *21* (Fig. 12) accommodating the magnetically soft working medium; with a tornado-type pump *22* which is mated with the movable power disk *16*, said disk *16* swirling into a tornado-like jet the flow of heat-transfer agents delivered to the channels with magnetically soft material located on the disk *16*, the spatial orientation of said channels corresponding to the necessary and sufficient conditions of formation of tornado-like swirling flow; and with at least one tornado-type turbine 23 mounted in the system of tornado-type cooling *17* of the converter *11* along the symmetry axis of the latter for converting the power of tornado-like jet formed in the tornado-type pump *22*.

The tornado-type converter of energy of continuous medium comprises supports *24* and load-bearing structures *25* mounted on a base *26*. The axisymmetric convergent tornado tower *1* consists of at least one convergent channel with height-variable radius *R* and is a body of volume *Q* open into environment in the zones of tower *1*, with the continuous medium entering the tower in the zone of maximal radius $R_{max}$ and flowing out from the tower to the environment in the zone of minimal radius $R_{min}$; in so doing, the tower *1* has height *Z* and inner boundary surface Σ, the shape of which corresponds to quadratic hyperbola so that the geometric dimensions of the tower *1* at its any height and in its any internal cross section are related by the relation

$$R_i^2 Z_i = \text{const},$$

where $R_i$ and $Z_i$ are cylindrical coordinates of any *i*-th point on the boundary surface Σ.

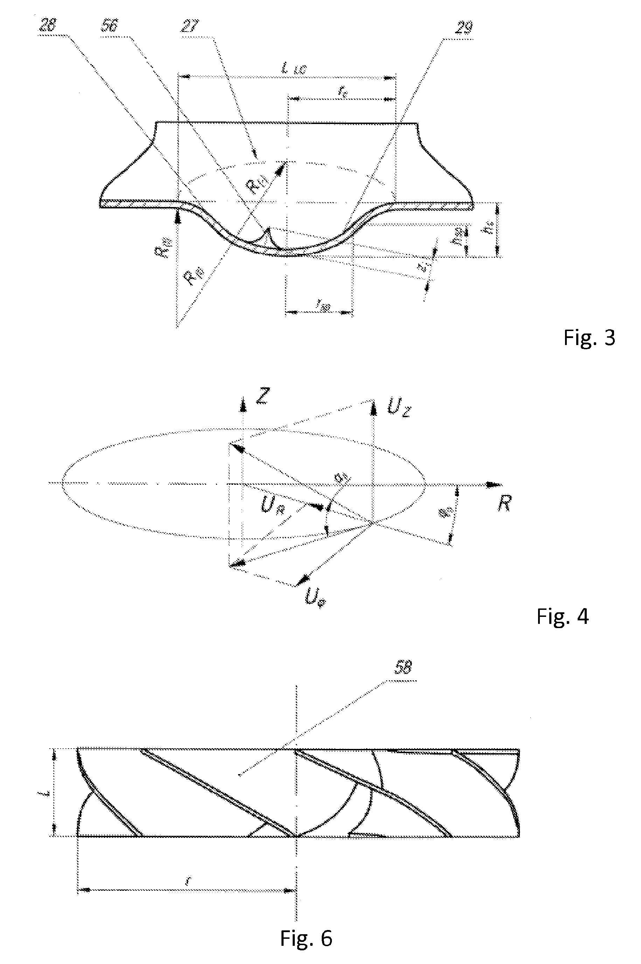

The surfaces of the convergent tower *1*, of the outer boundary of the fairing *3*, of the stationary elements of the guide unit *4* with blades, of the blades of the tornado-type blower *7*, and of the blades of the tornado-type turbines *8*, which are subjected to the flow of continuous medium within the *Q* region, are made smooth or have the form of alternating smooth and curvilinear segments in the form of recesses (dimples) *27* of double curvature (Figs. 3 and 12), which consist of mating quadric surfaces that form convex *28* (Fig. 3) and concave *29* (Fig. 3) slopes, with the mating of the dimples *27* with smooth surface segments *30* being accomplished by means of the convex slopes 28 of the dimples *27*, which have common tangents at all points of mating with the smooth surface and at all points of mating with the surface of the concave part of the dimple; in so doing, the concave slopes 29 of dimple are made smooth or with a fairing.

The ratio of depth $h_c$ of the dimples *27* (Figs. 3 and 12), reckoned from the level of the initially smooth surface *30*, to their dimensions $L_{LC}$ along the direction of flow is found in the range:

$$0.01 \leq h_c/L_{LC} \leq 0.5,$$

and the ratio of longitudinal dimension $L_{LC}$ of the dimple *27* to transverse dimension $L_{BC}$ of said dimple is in the range:

$$0.25 \leq L_{LC}/L_{BC} \leq 1,$$

with the surface density *f* of the dimples *27* being in the range:

$$0.1 \leq f \leq 0.785.$$

The axisymmetric fairing *3* is mounted along the symmetry axis of the tornado tower *1*; in so doing, the fairing *3* is a body of revolution, the projection of which onto the longitudinal-and-radial plane (*R, Z*) has the shape of quadratic hyperbola defined by the relation:

$$R_{J,F}^2 Z_{J,F} = \text{const}, \quad J = 0, 1, 2, 3, \ldots, n,$$

where $R_{J,F}$ and $Z_{J,F}$ denote the radius and height of the fairing *3*, and the ratio of maximal radius $R_{n,F}$ of outer boundary surface of the fairing *3* to maximal radius $R_{in}$ of the tower *1* lies in the range:

$$0.02 \quad \leq (R_{n,F}/R_{in}) \leq 0.3.$$

The fairing *3* has an opening, at whose center lying on the symmetry axis of the tower *1* there passes the power shaft *5* which connects the volume of the tornado tower *1* with the volume of the converter *11*; in so doing, the power shaft *5* within the tornado tower *1* is mating with the blower *7,* and within the converter *11* - with the movable power disk *16* rotating in the gap of the magnet system *12.*

The stationary guide unit *4* of the tornado tower *1* has blades, the shape of which is defined by the following relations:

in the longitudinal-and-radial plane (*R, Z*):

- along the radius of tornado tower *1* on the boundary Σ:

$$Z_\Sigma R_\Sigma^2 = \text{const,}$$

- at any *K*th point of the *J*th surface within the selected region *Q*:

$$Z_{K,J} R_{K,J}^2 = \text{const,} \qquad J = 0, 1, 2, 3, \ldots, n, K = 0, 1, 2, 3, \ldots, m;$$

in the azimuthal-and-radial plane (Ψ, *R*):

- on the azimuth of tornado tower *1* on the boundary Σ:

$$\Psi_\Sigma = \text{arc } \tan(U_{\Psi,\Sigma}/U_{R,\Sigma}),$$

- at any *K*-th point of the *J*-th surface within the selected region *Q:*

$$\Psi = \Psi_\Sigma + (U_{\Psi,\Sigma}/2U_{R,\Sigma})[(R_{in}/R_{K,J})^2 - 1], \quad J = 1, 2, 3, \ldots, n, K = 0, 1, 2, 3, \ldots, m,$$

where *R, Z,* and Ψ are cylindrical coordinates of the tornado tower *1, U* is the velocity of flow of continuous medium; the subscripts "Σ", "Ψ, Σ", "R, Σ", "in", and "J", "Z, Σ" indicate coordinates and velocities on the inner boundary surface Σ of the tornado tower *1* and at any *K*-th point of the *J*-th surface within the selected region *Q,* respectively; in so doing, $U_{R,\Sigma}$ is related to the geometric dimensions of the region of formation of flow and is defined by the equation:

$$U_{R,\Sigma} = (U_{\Psi,\Sigma}^2 + U_{Z,\Sigma}^2 + U_{R,\Sigma}^2)^{0.5}/\{1 + (2Z_{in}/R_{in})^2 + (\Gamma_0/2\pi R_{in})[1 - \exp(-U_{R,\Sigma}R_{in}/2\nu)]^2\}^{0.5}.$$

The technical result of the invention is attained only within the foregoing relations, as is confirmed by the experimental results.

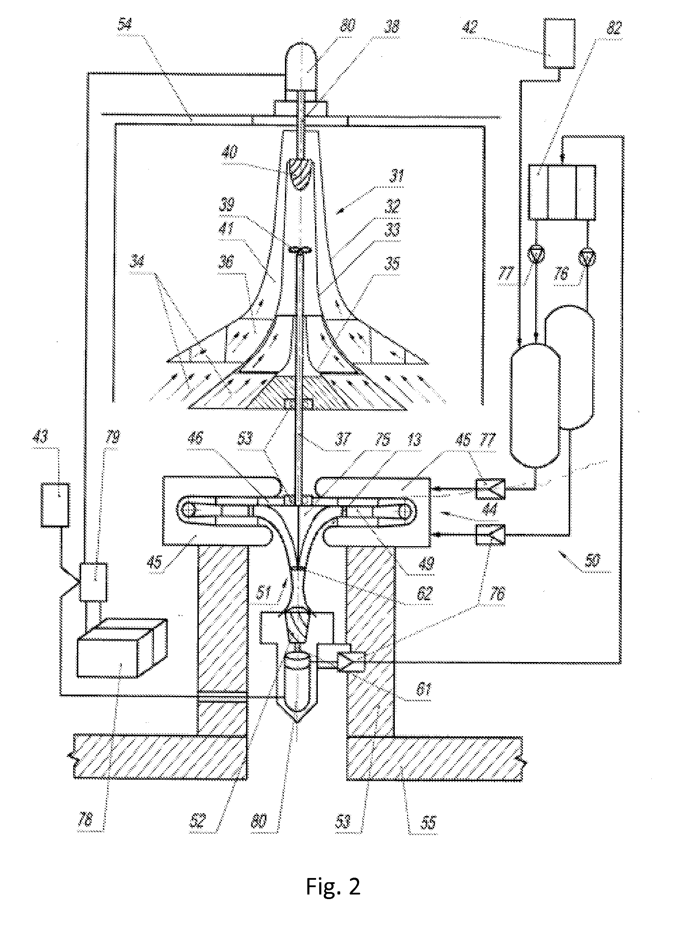

The tornado-type converter of energy of continuous medium (alternative embodiment 2, Fig. 2) comprises an axisymmetric convergent tornado tower *31* consisting of at least two axisymmetric convergent channels, namely, an outer convergent channel *32* and an inner convergent channel *33,* and equipped with receivers *34* of flows of continuous medium, a fairing *35,* a stationary guide unit *36* with blades arranged about the symmetry axis of the tower and rigidly connected to the outer convergent surfaces and to the fairing *35* mounted along the symmetry axis of the tower *31*; a lower rotating power shaft *37* and an upper rotating power shaft *38,* the symmetry axes of said shafts coinciding with the symmetry axis of the tower *31*; a tornado-type blower *39* mounted above said stationary guide unit *36* and rigidly connected to the lower power shaft *37*; and at least one tornado-type turbine *40* which is mounted along the symmetry axis of the tower and is rigidly connected to the upper power shaft *38.*

The tornado-type converter of energy of continuous medium comprises converters of solar radiation, which consist of heaters of continuous medium and converters of solar radiation directly to electrical energy in a gap *41* between the optically transparent convergent channel *32* of the tornado tower *31* and the convergent channel *33* whose surface exhibits a high value of coefficient of absorption of solar radiation. The tornado-type converter of energy of continuous medium further comprises at least one converter of solar energy *42* for the purpose of heating the heat-transfer agent and at least one converter *43* designed to utilize the solar radiation for generating electrical power.

The tornado-type converter of energy of continuous medium according to the invention comprises a tornado-type magneto-thermal converter *44* of low-potential heat and of the energy stored in magnetic field, which is equipped with:

- a magnet system *45* with a gap *46,* which consists of a magnet *47* (Fig. 11) generating a gradient magnetic field and of a magnet *48* (Fig. 11) generating a uniform magnetic field, said magnets *47* and *48* being located beneath the stationary guide unit *36* along the symmetry axis of the convergent tornado tower *31*;
- a movable power disk *49,* which carries a magnetically soft working medium, is mounted in the gap of the magnet system *45,* and is rigidly connected by the lower rotating power shaft *37* to the tornado-type blower *39* within the tornado tower *31*;
- a tornado-type system *50* of heating and cooling of magnetically soft working medium, which is mounted along the symmetry axis of the tornado tower beneath the stationary guide unit *36* and is rigidly connected to the rotating power shaft *37*;
- a tornado-type pump *51* which is mated with the movable power disk *49,* said disk *49* swirling into a tornado-like jet the flows of heat-transfer agents delivered to the channels with magnetically soft material located on the disk *49,* the spatial orientation of said channels corresponding to the necessary and sufficient conditions of formation of tornado-like swirling flow; and
- at least one tornado-type turbine *52* mounted in the system of tornado-type cooling for conversion of the energy of tornado-like jet of the heat-transfer agent employed for heating and cooling of magnetically soft material.

The tornado-type converter of energy of continuous medium according to the invention comprises supports *53* and load-bearing structures *54* mounted on a base *55*. The axisymmetric convergent tornado tower *31* consists of the outer convergent channel *32* and inner convergent channel *33* with height-variable radius $R$ and is a body of volume $Q_\Sigma$ open into environment in the zones of tower *31* of maximal radii $R_{OS,max}$ and $R_{IS,max}$, respectively, with the continuous medium entering the tower *31* in the zones of these maximal radii and flowing out from the tower in the zones of minimal radii $R_{OS,min}$ and $R_{IS,min}$; in so doing, the outer convergent channel of the tower has height $Z_{OS}$ and inner boundary surface $\Sigma_{OS}$, and the inner convergent channel of the tower has height $Z_{IS}$ and inner boundary surface $\Sigma_{IS}$, the shape of the boundary surfaces corresponding to quadratic hyperbola so that the geometric dimensions of the convergent channels of the tower *31* at its any height and in its any internal cross section are related by the relations:

$$R_{i,IS}{}^2 Z_{i,IS} = \mathrm{const}_{i,IS}; \qquad R_{i,OS}{}^2 Z_{i,OS} = \mathrm{const}_{i,OS}; \qquad i = 0, 1, 2, 3, \ldots, n,$$

where $R_{i,OS}$ and $R_{i,IS}$ are the radii of any *i*-th point on the surfaces of the outer *32* and inner *33* axisymmetric convergent channels, and $Z_{i,OS}$ and $Z_{i,IS}$ are cylindrical coordinates of the ith point on the surface of these convergent channels. The outer convergent channel is made of an optically transparent material, and the inner convergent channel - of a material exhibiting a high value of coefficient of absorption of solar radiation used for heating the medium in the space between the outer and inner convergent channels and, indirectly, within the inner convergent channel *33.* The solar radiation is directed straight to the optically transparent convergent channel *32* by means of conventional concentrators of solar radiation and/or concentrators made on the surface of convergent channel *32* in the form of recesses (dimples) *27* with quadric surface of double curvature. The boundary surfaces of the convergent channels *32* and *33,* of the fairing *35*, of the stationary elements of the guide unit *36,* of the blades of the tornado-type blower *39,* and of the blades of the tornado-type turbines *40,* which are subjected to the flow of continuous medium within the $Q$ region, are made smooth or have the form of alternating smooth segments of initial surface and curvilinear segments in the form of recesses (dimples) of double curvature, which consist of mating quadric surfaces that form convex *28* and concave *29* slopes, with the mating of the dimples with initially smooth surface being accomplished by means of their convex slopes *28* which have common tangents at all points of mating with the smooth surface *30* and at all points of mating with the surface of the concave slopes of the dimple *29,* which is smooth or with a fairing.

The ratio of depth $h_c$ of the dimples *27,* reckoned from the level of the initially smooth surface, to their dimensions $L_{LC}$ along the direction of flow is found in the range

$$0.01 \;\; \leq h_c / L_{LC} \leq 0.5,$$

and the ratio of longitudinal dimension $L_{LC}$ of the dimple to transverse dimension $L_{BC}$ of said dimple is in the range:

$$0.25 \leq L_{\text{LC}}/L_{\text{BC}} \leq 1.25,$$

with the surface density *f* of the dimples being in the range:

$$0.1 \leq f \leq 0.785.$$

The axisymmetric fairing *35* is mounted along the symmetry axis of the tornado tower *31*; in so doing, the fairing *35* is a body of revolution, the projection of which onto the longitudinal-and-radial plane (*R, Z*) has the shape of quadratic hyperbola defined by the relation:

$$R_{\text{J,F}}^{2} Z_{\text{J,F}} = \text{const}, \qquad\qquad J = 0,1,2,3, \ldots, n,$$

where $R_{\text{J,F}}$ and $Z_{\text{J,F}}$ denote the radius and height of the fairing *35*, and the ratio of maximal radius $R_{\text{n,F}}$ of outer boundary surface of the fairing to maximal radius $R_{\text{in}}$ of the tornado tower *31* lies in the range:

$$0.02 \quad \leq (R_{\text{n,F}}/R_{\text{in}}) \leq 0.3.$$

The fairing *35* has an opening, the center of which lies on the symmetry axis of the tower *31*, and is mated by the power shaft *37* with the movable power disk *49*.

The stationary guide unit *36* of the tornado tower *31* has blades, the shape of which is defined by the following relations:

in the longitudinal-and-radial plane (*R, Z*) -

- along the radius of tornado tower *1* on the boundary Σ: $Z_{\Sigma} R_{\Sigma}^{2} = \text{const}$,
- at any *K*th point of the *J*th surface within the selected region *Q*:

$$Z_{\text{K,J}} R_{\text{K,J}}^{2} = \text{const}, \qquad\qquad J = 0, 1, 2, 3, \ldots, n, K = 0, 1, 2, 3, \ldots, m;$$

in the azimuthal-and-radial plane (Ψ, *R*) :

- on the azimuth of tornado tower *1* on the boundary Σ

$$\Psi_{\Sigma} = \text{arc tan}\, (U_{\Psi,\Sigma}/U_{\text{R},\Sigma}),$$

- at any *K*th point of the *J*th surface within the selected region *Q*:

$$\Psi = \Psi_{\Sigma} + (U_{\Psi,\Sigma}/2U_{\text{R},\Sigma})[(R_{\text{in}}/R_{\text{K,J}})^{2} - 1], \qquad J = 1,2,3, \ldots, n, K = 0,1,2,3, \ldots, m,$$

where *R, Z,* and Ψ are cylindrical coordinates of the tornado tower *1*, *U* is the velocity of flow of continuous medium; the subscripts "Σ", "Ψ, Σ", "R, Σ", "Z, Σ", "in", and "J" indicate coordinates and velocities on the inner boundary surface Σ of the tornado tower *1* and at any *K*th point of the *J*th surface within the selected region *Q*, respectively; in so doing, $U_{\text{R},\Sigma}$ is related to the geometric dimensions of the region of formation of flow and is defined by the equation:

$$U_{\text{R},\Sigma} = (U_{\Psi,\Sigma}^{2} + U_{Z,\Sigma}^{2} + U_{\text{R},\Sigma}^{2})^{0.5}/\{1 + (2Z_{\text{in}}/R_{\text{in}})^{2} + (\Gamma_{0}/2\pi R_{\text{in}})[1 - \exp(-U_{\text{R},\Sigma} R_{\text{in}}/2\nu)]^{2}\}^{0.5}.$$

The tornado-type converter of energy of continuous medium according to the invention comprises a mechanical pump *76* which delivers a nominally cold heat-transfer agent to the system of cooling of magnetically soft material, a mechanical pump *77* which delivers a nominally hot heat-transfer agent to the system of heating of magnetically soft material, a block of starter batteries *78,* an assembly of electric switching devices *79* for automatic control of the converter operation, generators *80* which convert the mechanical power extracted by the turbine from the tornado-like flow to electrical power, and a flywheel (not shown in the drawing) which stabilizes the rotational motion of blowers connected to the power disk of the magneto-thermal converter.

The tornado-type converter of energy of continuous medium according to the invention comprises a block of magneto-mechanical suspension assemblies and bearing assemblies (not shown in the drawing), which couple the axles of moving structural elements of the converter with mechanical converting mechanisms and/or electric generators.

The technical result of the proposed invention is attained only within the foregoing relations, as is confirmed by the experimental results.

The method of tornado-type conversion of the energy of continuous medium is realized in the proposed converter (alternative embodiment 1) as follows:

- the continuous medium from the environment is delivered along a plurality of trajectories into an axisymmetric region $Q_\Sigma$ which has the shape of convergent channel, a height $Z_{out}$, and a height-variable radius:

$$R_{in} \geq R \geq R_{out},$$

or several nested convergent channels, each having a volume $Q_K$, a height $Z_{K,out}$, and a height-variable radius $R$ varying in the range:

$$R_{K,in} \geq R \geq R_{K,out};$$

in so doing, the $Q_\Sigma$ and $Q_K$ regions have inlet and outlet segments on the boundary surfaces $\Sigma_Q$ and $\Sigma_{QK}$, respectively, and the height and radius of the regions are selected such that the following relations would be valid everywhere on the boundaries $\Sigma_Q$ and $\Sigma_{QK}$ and within the $Q$ region:

$$R_{in}{}^2 Z_{in} = R_{I,\Sigma}{}^2 Z_{I,\Sigma} = R_{out}{}^2 Z_{out} = const_\Sigma,$$

$$R_{J,K}{}^2 Z_{J,K} = const_J,$$

where the subscript "in" assigned to cylindrical coordinates $Z_{in}$, $R_{in}$, $\Psi_{in}$ indicates that they belong to the inlet segment of the boundary surface $\Sigma$, the subscript "out" assigned to cylindrical coordinates $Z_{out}$, $R_{out}$, $\Psi_{out}$ indicates that they belong to the outlet segment of the boundary surface $\Sigma$; for the region located within the convergent channel, the subscript "J,K" indicates the position of any $J$-th point on the $K$-th surface within the volume of convergent channel defined by the surface $\Sigma$, the subscripts "$\Sigma$" and "J" assigned to constants "const" indicate that each "const" belongs to the volume enclosed within the boundary surface $\Sigma$ and within each $J$th surface within the $Q_\Sigma$ region; accordingly, the subscripts "$\Sigma$" and "J" assigned to constants "const" indicate that each "const" belongs either to the volume $Q_\Sigma$ or to any volume $Q_J$. The trajectories of the medium moving in the inlet segment of the boundary surface $\Sigma$ are directed into the $Q_\Sigma$ region at a local azimuth angle $\Psi_{0\Sigma}$ which defines within the $Q_\Sigma$ region the initial swirling of flow of continuous medium with respect to radius $R_{in}$ and at local angles of elevation $\alpha_{0\Sigma}$ with respect to the direction of symmetry axis of this region, the selected spatial orientation of said static surfaces providing for the formation of jets the confluence of which in the axisymmetric $Q_\Sigma$ region provides for tornado-like swirling and radial convergence in swirling flow arising as a result of acceleration. The swirling flow being formed is quasi-potential and moves within the axisymmetric $Q_\Sigma$ region in a channel or channels of convergent shape with the cross section decreasing from the inlet to outlet segment to acquire acceleration which causes an increase in the flow velocity and in the pressure difference between the medium in external space and the medium in the $Q_\Sigma$ region; owing to this, the velocity $U_{in}$ of flow into this region is increased compared to the velocity of flow into the $Q_\Sigma$ region in the absence of blower-generated swirling jet in this region; the kinetic power of flow is concentrated in the accelerating swirling jet, the maximum of said kinetic power being attained in the zone of $Q_\Sigma$ region of radius $R_{max}$ and longitudinal coordinate $Z_{max}$, which define the equality of the longitudinal component of velocity $U_Z$ and azimuthal velocity $U_\Psi$; said zone accommodates the converter of kinetic power of swirling flow to mechanical power. The flow of continuous medium which passes through said zone loses swirling, gives up a part of its kinetic power to turbine blades, and decelerates; therefore, a compression zone is located in the $Q_\Sigma$ region in order to compensate for the deceleration of the flow into the space between stationary guide surfaces and the zone of conversion of kinetic power of swirling flow to mechanical power, said compression zone causing an increase in the velocity $U_{out}$ in this segment and, indirectly, in the outlet segment of the boundary surface $\Sigma$; in so doing, the increase in the velocity $U_{out}$ with respect to the velocity $U_{in}$ of the flow into the $Q_\Sigma$ region is defined by the ratio of the radius of the outlet segment $R_{out}$ to the dimensions of the inlet segment $Z_{in}$ of the boundary surface $\Sigma$ which are transverse with respect to the direction of inward flow:

$$U_{in}/U_{out} = R_{out}/n\, Z_{in},$$

where $n$ is determined in the $1 \leq n \leq 20$ range, and the radii $R_{in}$ and $R_{out}$ of the $Q_\Sigma$ region are determined in the range:

$$1.5 \leq R_{in}/R_{out} \leq 7.5.$$

The energy of inflowing continuous medium and/or the heat of solar radiation, and/or the energy stored in the magnetic field of permanent magnets *14* and *15* and in magnetically soft materials located in the channels *21* are used for forming a swirling flow. The surfaces of the internal boundary $\Sigma$ of the fairing *3* and of the stationary elements of the guide unit *4,* which are subjected to the flow of continuous medium within the $Q_\Sigma$ region, are formed by the dimples *27* of double curvature, which are curvilinear quadric surfaces *28* and *29* alternating with regions of initially smooth surface, with the mating of dimples *27* with initially smooth surfaces being accomplished by means of the convex part *28* of their surface, the slopes of which have common tangents at all points of mating with the smooth surface and at all points of mating with the concave part *29* of the dimple surface; in so doing, the concave part *29* of dimple is made smooth or with a fairing *56*.

The ratio of depth $h_c$ of the dimples 27 to their dimension $L_{LC}$ along the direction of flow is found in the range:

$$0.01 \quad \leq h_c/L_{LC} \leq 0.12,$$

and the ratio of longitudinal dimension $L_{LC}$ of dimple to transverse dimension $L_{BC}$ of dimple is in the range:

$$0.25 \leq L_{LC}/L_{BC} \leq 1.25,$$

with the surface density $f$ of dimples found in the range:

$$0.1 \quad \leq f \leq 0.785,$$

where the subscripts LC and BC indicate the longitudinal and transverse dimensions along and across the flow, respectively.

The velocity of tornado-like swirling flow in the inlet part of boundary $\Sigma$ of region $Q$ and at any $K$th point on the $J$th surface within this region is defined by the relations:

$$U_{in} = (U_{\Psi\Sigma}{}^2 + U_{Z\Sigma}{}^2 + U_{R\Sigma}{}^2)^{0.5} \text{ and } U_{J,K} = (U_{\Psi,J,K}{}^2 + U_{Z,J,K}{}^2 + U_{R,J,K}{}^2)^{0.5},$$

respectively; in so doing, the local angle of elevation $\alpha_{0\Sigma}$ and the local azimuth angle $\Psi_0$ are defined by the relations:

$$\alpha_{0\Sigma} = \text{arc cos } (U_{Z,in}/U_{\Sigma,in}) \text{ and } \Psi_0 = \text{arc tan}(U_{\Psi\Sigma}/U_{R,\Sigma}),$$

respectively; in so doing, the angle $\alpha_{0\Sigma}$ is formed by a guide surface which contacts the surface $\Sigma$ or surfaces $\Sigma_J$ at the point (points) of its (their) intersection with the radial-and-azimuth plane on the longitudinal coordinate $Z$ in the range:

$$Z_{in} \leq Z \leq nZ_{in},$$

where $n$ varies in the range from 1.25 to 3.5, which provides for the formation in the selected region $Q$ of a tornado-like quasi-potential swirling flow, with the velocity components on the boundary $\Sigma$ and within the region being defined by the following relations:

- along the radius of region $Q$:

    on the boundary $\Sigma$:

$$U_{R,\Sigma} = -C_0(t)R_{in},$$

    at any $K$-th point of the $J$-th surface within the selected region $Q$:

$$U_{R,J,K} = -C_0(t)R_{J,K};$$

- along the region $Q$:

    on the boundary $\Sigma$:

$$U_{Z,in} = 2C_0(t)Z_{in},$$

    at any $K$th point of the $J$th surface within the selected region $Q$:

$$U_{Z,J,K} = 2C_0(t)Z_{J,K};$$

    on the azimuth of region $Q$:
    on the boundary $\Sigma$:

$$U_{\Psi\Sigma} = (\Gamma_0(t)/2\pi R_{in})[1 - \exp(-C_0(t)R_{in}^2/2\nu)],$$

    at any $K$-th point of the $J$-th surface within the selected region $Q$:

$$U_{\Psi\Sigma} = (\Gamma_0(t)/2\pi R_J)[1 - \exp(-C_0(t)R_J^2/2\nu)],$$

where $\Gamma_0(t)$ is the time-dependent circulation of the medium in tornado-like vortex; in so doing, the swirling flow radially converges along the symmetry axis of region $Q$ as the radius $R_{J,K}$ of said region decreases, including the point $R_{in}$ on the boundary surface $\Sigma$, which is indicated by the sign of minus in the time-dependent expression of radial gradient of velocity of tornado-like flow $C_0(t) = -(U_{R,\Sigma}(t)/R_{in})$; in so doing, $C_0(t)$ and $\Gamma_0(t)$ vary following the variation in time of the velocity $U_{in}$ of the flow into the region $Q$, and the power of the formed tornado-like quasi-potential jet increases proportionally with $N_{out} \sim U_{out}^3$ with the energy balanced between its concentrated amount in the formed tornado-like flow and the energy of the medium flowing into the region $Q$ via boundary surface $\Sigma$.

The technical result of the proposed invention is attained only within the foregoing relations, as is confirmed by the experimental results.

The method of tornado-type conversion of the energy of continuous medium is realized in the proposed converter according to alternative embodiment 2 as follows:

- the tornado tower *31* is located in the country area free of vegetation and buildings which would obstruct the motion of masses of air;
- the solar radiation is directed onto the surface of optically transparent convergent channel *32* directly or by means of concentrators of solar radiation to develop on the absorbing surface of inner convergent channel *33* the temperature gradient directed away from the inlet opening of the tower toward its outlet opening;
- the continuous medium in the gap *41* between the optically transparent convergent channel *32* and the convergent channel *33* with absorbing surface to provide for a thermally induced accelerating tornado-like flow for which the inner absorbing convergent channel *33* serves as fairing; in so doing, the outlet opening of the inner convergent channel *33* is located below the outlet opening of the convergent channel *32* with optically transparent surface;

- the dynamic pressure is reduced in the zone above the outlet opening of the inner convergent channel *33* in the tornado-like flow formed in the gap *41* between the optically transparent convergent channel *32* and the convergent channel *33* with absorbing surface, and the medium is sucked in from the volume of the inner convergent channel *33*;

- owing to this, the continuous medium from the environment is delivered along a plurality of trajectories into an axisymmetric region $Q_\Sigma$ which has the shape of convergent channel, a height $Z_{out}$, and a height-variable radius

$$R_{in} \geq R \geq R_{out},$$

or several nested convergent channels, each having a volume $Q_K$, a height $Z_{K,out}$, and a height-variable radius $R$ varying in the range

$$R_{K,in} \geq R \geq R_{K,out}.$$

The $Q_\Sigma$ and $Q_K$ regions have inlet and outlet segments on the boundary surfaces $\Sigma_Q$ and $\Sigma_{QK}$, respectively, and the height and radius of the regions are selected such that the following relations would be valid everywhere on the boundaries $\Sigma_Q$ and $\Sigma_{QK}$ and within the $Q$ region:

$$R_{in}{}^2 Z_{in} = R_{I,\Sigma}{}^2 Z_{I,\Sigma} = R_{out}{}^2 Z_{out} = const_\Sigma,$$

$$R_{J,K}{}^2 Z_{J,K} = const_J,$$

where the subscript "in" assigned to cylindrical coordinates $Z_{in}$, $R_{in}$, $\Psi_{in}$ indicates that they belong to the inlet segment of the boundary surface $\Sigma$, the subscript "out" assigned to cylindrical coordinates $Z_{out}$, $R_{out}$, $\Psi_{out}$ indicates that they belong to the outlet segment of the boundary surface E; for the region located within the convergent channel, the subscript "J,K" indicates the position of any $J$th point on the $K$th surface within the volume of convergent channel defined by the surface $\Sigma_K$, the subscripts "$\Sigma$" and "J" assigned to constants "$const_\Sigma$" and "$const_J$" indicate that each "const" belongs to the volume enclosed within the boundary surface $\Sigma$ and within each $J$th surface within the $Q_\Sigma$ region, respectively. The trajectories of the medium moving in the inlet segment of the boundary surface $\Sigma$ are directed into the $Q_\Sigma$ region at a local azimuth angle $\Psi_0$ which defines within the $Q_\Sigma$ region the initial swirling of flow of continuous medium with respect to radius $R_{in}$ and at local angles of elevation $\alpha_{0\Sigma}$ with respect to the direction of symmetry axis of this region, the selected spatial orientation of said static surfaces providing for the formation of jets the confluence of which in the axisymmetric $Q_\Sigma$ region provides for tornado-like swirling and radial convergence in swirling flow arising as a result of confluence. The swirling flow being formed is quasi-potential and moves within the axisymmetric $Q_\Sigma$ region in a channel or channels of convergent shape with the cross section decreasing from the inlet to outlet segment to acquire acceleration which causes an increase in the flow velocity and in the pressure difference between the medium in external space and the medium in the $Q_\Sigma$ region; owing to this, the velocity $U_{in}$ of flow into this region is increased compared to the velocity of flow into the $Q_\Sigma$ region in the absence of blower-generated swirling jet in this region. The kinetic power of flow is concentrated in the accelerating swirling jet, the maximum of said kinetic power being attained in the zone of $Q_\Sigma$ region of radius $R_{max}$ and longitudinal coordinate $Z_{max}$, which define the equality of the longitudinal component of velocity $U_Z$ and azimuthal velocity $U_\Psi$. Said zone accommodates the converter of kinetic power of swirling flow to mechanical power; in so doing, the flow of continuous medium which passes through said zone loses swirling, gives up a part of its kinetic power to the blades of turbine *40,* and decelerates; therefore, a compression zone is located in the $Q_\Sigma$ region in order to compensate for the deceleration of the flow into the space between stationary guide surfaces and the zone of conversion of kinetic power of swirling flow to mechanical power, owing to the provision of the tornado-type blower *39* which causes an increase in the velocity $U_{out}$ in this segment and, indirectly, in the outlet segment of the boundary surface E; in so doing, the increase in the velocity $U_{out}$ with respect to the velocity $U_{in}$ of the flow into the $Q_\Sigma$ region is defined by the ratio of the radius of the outlet segment $R_{out}$ to the dimensions of the inlet segment $Z_{in}$ of the boundary surface $\Sigma$ which are transverse with respect to the direction of inward flow:

$$U_{in}/U_{out} = R_{out}/n\, Z_{in},$$

where $n$ is determined in the $1 \leq n \leq 20$ range, and the radii $R_{in}$ and $R_{out}$ of the $Q_\Sigma$ region are determined in the range:

$$1.5 \leq R_{in}/R_{out} \leq 7.5.$$

The energy of inflowing continuous medium and/or the heat of solar radiation, and/or the geothermal energy, and/or the energy of thermal waste of anthropogenic activity, and the energy stored in the magnetic field of permanent magnets and in magnetically soft materials are used for forming a swirling flow; in so doing, the surfaces of the internal boundary $\Sigma$ of the fairing *3* and of the movable and stationary elements of the guide unit *36,* which are subjected to the flow of continuous medium within the $Q_\Sigma$ region, are formed by the dimples *27* of double curvature, which are curvilinear quadric surfaces alternating with regions of initially smooth surface, with the mating of dimples *27* with initially smooth surface being accomplished by means of the convex part *28* of their surfaces, the slopes of which have common tangents at all points of mating with the smooth surface and at all points of mating with the concave part *29* of the dimple surface; in so doing, the concave part of dimple is made smooth or with a fairing *56*.

The ratio of depth $h_c$ of the dimples *27* to their dimension $L_{LC}$ along the direction of flow is found in the range:

$$0.01 \quad \leq h_c/L_{LC} \leq 0.12,$$

and the ratio of longitudinal dimension $L_{LC}$ of the dimple *27* to transverse dimension $L_{BC}$ of dimple is in the range:

$$0.25 \leq L_{LC}/L_{BC} \leq 1.25,$$

with the surface density $f$ of the dimples *27* found in the range:

$$0.01 \leq f \leq 0.785,$$

where the subscripts LC and BC indicate the longitudinal and transverse dimensions of the dimples *27* along and across the flow, respectively.

The velocity of tornado-like swirling flow in the inlet segment of boundary $\Sigma$ of region $Q$ and at any $K$-th point on the $J$-th surface within this region is defined by the relations:

$$U_{in} = (U_{\Psi\Sigma}{}^2 + U_{Z\Sigma}{}^2 + U_{R\Sigma}{}^2)^{0.5} \text{ and } U_{J,K} = (U_{\Psi,J,K}{}^2 + U_{Z,J,K}{}^2 + U_{R,J,K}{}^2)^{0.5},$$

respectively; in so doing, the local angle of elevation $\alpha_{0\Sigma}$ and the local azimuth angle $\Psi_0$ are defined by the relations:

$$\alpha_{0\Sigma} = \text{arc } \cos(U_{Z,in}/U_{\Sigma,in}) \text{ and } \Psi_0 = \text{arc } \tan(U_{\Psi,\Sigma}/U_{R,\Sigma}),$$

respectively; in so doing, the angle $\alpha_{0\Sigma}$ is formed by a guide surface which contacts the surface $\Sigma$ or surfaces $\Sigma_J$ at the point (points) of its (their) intersection with the radial-and-azimuth plane on the longitudinal coordinate $Z$ in the range

$$Z_{in} \leq Z \leq nZ_{in,}$$

where $n$ varies in the range from 1.25 to 3.5, which provides for the formation in the selected region $Q$ of a tornado-like quasi-potential swirling flow, with the velocity components on the boundary $\Sigma$ and within the region being defined by the following relations:

- along the radius of region $Q$:

    on the boundary $\Sigma$: $U_{R,\Sigma} = -C_0(t)R_{in},$
    at any $K$-th point of the $J$-th surface within the selected region $Q:$

$$U_{R,J,K} = -C_0(t)R_{J,K};$$

- along the region $Q$:

on the boundary $\Sigma$:

$$U_{Z,in} = 2C_0(t)Z_{in},$$

at any $K$th point of the $J$th surface within the selected region $Q$:

$$U_{Z,J,K} = 2C_0(t)Z_{J,K};$$

on the azimuth of region $Q$:
on the boundary $\Sigma$:

$$U_{\Psi\Sigma} = (\Gamma_0(t)/2\pi R_{in})[1 - \exp(-C_0(t)R_{in}^2/2\nu)],$$

at any $K$th point of the $J$th surface within the selected region $Q$:

$$U_{\Psi\Sigma} = (\Gamma_0(t)/2\pi R_J)[1 - \exp(-C_0(t)R_J^2/2\nu)],$$

where $\Gamma_0(t)$ is the time-dependent circulation of the medium in tornado-like vortex; in so doing, the swirling flow radially converges along the symmetry axis of region $Q$ as the radius $R_{J,K}$ of said region decreases, including the point $R_{in}$ on the boundary surface $\Sigma$, which is indicated by the sign of minus in the time-dependent expression of radial gradient of velocity of tornado-like flow $C_0(t) = -(U_{R,\Sigma}(t)/R_{in})$; in low into the region $Q$, and the power of the formed tornado-like quasi-potential jet increases proportionally with $N_{out} \sim U_{out}^3$ with the energy balanced between its concentrated amount in the formed tornado-like flow and the energy of the medium flowing into the region $Q$ via boundary surface $\Sigma$.

One of the realistic possibilities of evacuation is by developing a converter equipped with two convergent tornado towers *31*, one built into the other, and the convergent fairing 35. The outer convergent tornado tower *32* is made of an optically transparent material with a view to utilizing the heat of solar radiation for heating the mass of continuous medium enclosed in the gap *41* between the inner surface of the outer convergent tornado tower *32* and outer surface of the inner convergent tornado tower *33* and stimulating a thermally induced upward flow in this zone. For the same purpose, the outer surface of the inner convergent tornado tower *33* is made of a material exhibiting a high value of coefficient of absorption of solar radiation.

The systems of channels, via which the mass of continuous medium is delivered into the tornado tower, converge to the symmetry axis of the tower to form a tornado-like flow. In so doing, the flow of continuous medium directed into the inner convergent tower acquires the structure of tornado-like swirling flow owing to the shape of the channels.

As the swirling flow advances toward the outlet from the tower, the kinetic power introduced into the tower by the flow from continuous medium is concentrated in the flow owing to the convergent shape of the tower *31*. This power reaches a maximum within the tower in the zone of transformation of pressure and kinetic power on condition of equality between the azimuthal $U_\Psi$ and longitudinal $U_Z$ components of velocity of tornado-like flow:

$$2C_0 Z_{max} = \Gamma_0/2\pi R_{max} [1 - \exp(-C_0 R_{max}^2/2\nu)].$$

The flow of continuous medium into the gap *41* of the tornado tower *31* likewise acquires the structure of tornado-like swirling flow; this flow accelerates, the energy is concentrated in the flow, and the pressure decreases. The thus formed tornado-like flow sucks off the mass of continuous medium decelerated as a result of interaction with the blades of the tornado-type turbine *40* and stabilizes the process of energy conversion. The scheme described above is given in Fig. 2.

The technical result of the proposed invention is attained only within the foregoing relations, as is confirmed by the experimental results.

The converter *9* or *42* of solar energy to heat comprises a hermetic housing *68* with channels *69* provided therein side; in so doing, the housing is heat-insulated on the bottom and on the sides with any heat-insulating material and, on the side on which the solar radiation flux is incident, the hpusing is coated with one or several layers *70* of optically transparent heat insulation through which the solar radiation falls on blackened metal surfaces *71* of the channels *69* formed by smooth or shaped plates or by pipes of any cross section, in which a heat-transfer agent heated by solar radiation is passed. A relief is applied to the sunlit surfaces of optically transparent insulation and to the surfaces of channels subjected to flow, said relief having the form of recesses (dimples) *27* of double curvature and of initially smooth segments alternating with these dimples and consisting of mating convex *28* and concave *29* parts of curvilinear surface, with the mating of the dimples *27* with the initially smooth surface segments being accomplished by means of the convex parts of the dimples, the slopes of which have common tangents at all points of mating with the smooth surface and with the concave part of the dimple surface; in so doing, the concave part of dimple is made smooth or with a fairing.

The ratio of depth $h_c$ of dimples on the channel surface to their dimension $L_{LC}$ along the direction of flow is found in the range:

$$0.01 \leq h_c/L_{LC} \leq 0.3,$$

and the ratio of longitudinal dimension $L_{LC}$ of dimple to transverse dimension $L_{BC}$ of dimple is in the range:

$$0.25 \leq L_{LC}/L_{BC} \leq 1,$$

with the dimples arranged on the surface with density $f$ found in the range:

$$0.04 \leq f \leq 0.5,$$

and the ratio of depth $h_c$ of dimples on the optically transparent surface to their diameter $d_c$ is in the range

$$0.01 \quad \leq h_c/d_c \leq 0.5,$$

with the dimples arranged on the surface with density $f$ in the range:

$$0.01 \leq f \leq 0.785.$$

The operation of the converter of solar energy to heat is based on solar illumination, via the optically transparent outer surface *70,* of the outer surface *71* of the channels *69* exhibiting a high value of the coefficient of absorption of solar radiation; this illumination results in the heating of the surface and of the liquid heat-transfer agent in the channel *69* defined by this surface. The dimples *27* are applied to the sunlit surfaces and to the surfaces subjected to flow, said dimples augmenting the amount of heat transferred to the heat-transfer agent.

The technical result of the proposed invention is attained only within the foregoing relations, as is confirmed by the experimental results.

The tornado-type magneto-thermal converter *11* or *44* comprises a magnet system *12* or *45* (Figs. 1, 2, and 11), the magnetic field in which is generated by a set of permanent magnets of different magnetic field intensities, and magnetic circuits arranged so that the magnetic field intensity varies from the minimal value at the inlet to the magnet to the maximal value at the end of the field. A magnetically soft material is located in movable channels *21* or *73* (Figs. 1, 2, and 11) formed between a disk made of nonmagnetic heat-insulating material and a coaxial ring of the same material and with outside radius equal to that of the disk. The magnetically soft material is arranged in the form of plates of height $h_M$ and thickness $\delta_M$ vertically between the disk and the ring and serves the function of the side walls of the channels *21* or *73* rotating together with the disk in the magnetic field. The converter *11* or *44* is provided with a hydraulic system of tornado-like cooling and heating with a tornado-type pump comprising an axisymmetric stationary convergent tornado-type channel, any longitudinal cross section of which containing the symmetry axis of the convergent channel is a quadratic hyperbola for which the equality $Z_i R_i^2 = \text{const}_P$ is valid in any transverse cross section with longitudinal coor-

dinate $Z_i$ and radius $R_i$ corresponding to said coordinate. The guide unit of the hydraulic system *17* or *50* (Figs. 1 and 2) of tornado-like cooling and heating of magnetically soft material comprises stationary nozzles *20* or *72* (Fig. 11), a fairing *74* or *75*, and movable blades of the blower *7* or *76*. The initial section of the blades consists of the magnetically soft working material and is a constituent part of guide surfaces which form in the pump a tornado-like swirling flow past the tornado-type turbine *62* or *63* mounted along the symmetry axis of the pump, the rotation of said turbine resulting in the recovery of a part of energy spent for cooling. All surfaces subjected, within the stationary convergent tornado tower, to flow by heat-transfer agents, including the surfaces of plates of magnetically soft material, have a relief in the form of alternating initially smooth segments and segments with curvilinear quadric surface in the form of recesses (dimples) 27 of double curvature, which consist of the convex 28 and concave 29 parts of the curvilinear surface of the dimples, said parts mating with one another and with initially smooth surface by means of the convex part of the relief, the slopes of which have common tangents at all points of mating with the initially smooth surface and with the concave bottom part of the dimple; in so doing, the concave part of dimple is made smooth or with a fairing.

The ratio of depth $h_c$ of dimples on the channel surface to their dimension $L_{LC}$ along the direction of flow is found in the range:

$$0.01 \leq h_c/L_{LC} \leq 0.1,$$

and the ratio of longitudinal dimension $L_{LC}$ of dimple to transverse dimension $L_{BC}$ of dimple is in the range:

$$0.25 \leq L_{LC}/L_{BC} \leq 1,$$

whereby the rate of heat and mass transfer between the layers of magnetically soft material and the heat-transfer agent is increased.

It was revealed by theoretical and experimental investigations that the relief of dimples *27* applied onto surfaces subjected to flow causes a variation of the structure of boundary layer of flow on the boundary surfaces and gives rise to the self-organization of tornado-like jets which suck off a part of continuous medium concentration in the zone of location of dimples on the surface subjected to flow, while affecting the level of dissipation of energy of flow and intensifying the exchange processes between the swirling jet and the surface. The choice of the curvature radii and of the dimensions curvilinear segments of the surface subjected to flow is based on the results of theoretical calculations confirmed by experimental investigations; provision is made for the development of technology of application of dimples on the surfaces and for the validity of condition of self-organization of secondary tornado-like jets built in the flow past the surfaces. Either the flow of continuous working medium is directed to the surface shaped by the dimples *27* or the relief of the above-identified shape is applied onto the surface of bodies moving in a medium of gases or liquids or in their two-phase mixtures, thereby attaining a reduction of friction stresses on shaped surfaces and intensifying the processes of mass and heat transfer between the energy-exchange surface and flows of continuous medium.

The heat-transfer agent is delivered to rotating channels *21* or *73* (Fig. 11) from a system *17* or *50* (Figs. 1 and 2) for tornado-like cooling and heating of the working medium via stationary nozzles *20* or *72,* the spatial orientation of the symmetry axis of each one of said stationary nozzles being conjugate with the spatial orientation of the symmetry axis and shape of movable channels with magnetically soft material and has the following form in the cylindrical coordinates:

- in the longitudinal-and-radial plane (*Z, R*),

$$(\pm Z_{J,M} R_{J,M}^2 = \text{const}, \quad J = 0, 1, 2, 3, \ldots, n, \quad M = 0, 1, 2, 3, \ldots, m;$$

- in the azimuthal-and-radial plane ($\Psi, R$):

$$\Psi_M = \Psi_{\Sigma M} \pm (U_{\Psi,\Sigma,M}/2U_{R,\Sigma,M})[(R_{in,M}^2/R_{J,M}^2) - 1], \quad J = 1,2,3,\ldots, n, M = 0,1,2,3,\ldots, m;$$

the $\pm$ sign with coordinate $Z$ in the expression for const in the longitudinal-and-radial plane (*Z, R*) is indicative of the possibility of selecting any direction of tornado-like flow toward either negative or positive values of axis *Z*; for coordinate $\Psi_M$ in the azimuthal-and-radial plane ($\Psi, R$), the $\pm$ sign likewise points to the possibility of selecting any direction of rotation both counterclockwise (the plus sign) and clockwise (the minus sign).

Magnet systems *12* or *45* are located at least at two opposite points on the diameter of power disk *16* or *49* so that the magnetically soft material is cooled down in the magnetic field of gradient magnet *15* or *48* by means of stationary nozzles *20* or *72* mounted in a zone taking up the space between the segment with minimal magnetic field intensity $H \sim H_{min}$ and the segment with magnetic field intensity $H \sim 0.95H_{max}$, and the heating of the working medium is provided by stationary nozzles likewise located inside of the gradient magnet and taking up the space between the zone of magnetic field intensity $H \sim 0.95H_{max}$ and the zone in which the magnetic field intensity is uniform and reaches a maximum $H \sim H_{max}$.

For the cooling and heating of magnetically soft material, the converter is provided with either a heat pump *81* or *82* (Figs. 1 and 2) or with any natural source of low-potential energy, for example, a collector of nominally cold water of creeks, rivers, or fresh-water lakes and a collector of nominally hot water of any origin for heating magnetically soft materials, for example, water heated in solar collectors, water of geothermal sources or thermal waste of anthropogenic activities such as nominally hot water cooled down in a cooling tower, the heat of flames of petroleum- and gas-processing, and other low-potential sources.

The converter *11* or *44* comprises a hydraulic system *17* or *50* (Figs. 1 and 2) for tornado-like cooling and heating of magnetically soft material with a system for recycling of water into the environment after its utilization and decrease in its temperature upon the mixing of heating and cooling streams; in so doing, the energy and temperature characteristics of the heating and cooling streams delivered from the stationary nozzles *20* or *72* (Fig. 11) to the channels for heating and cooling of said material, which are located on the rotating power disk *16* or *49* of nonmagnetic heat-insulating material, provide for magnetic phase transitions in the selected magnetically soft material. The shape of the boundary surfaces of the nozzles *20* or *72* and of the movable channels *21* or *73* (Fig. 11) mated with said surfaces and receiving the streams of heat-transfer agent is defined by the following relations:

- in the longitudinal-and-radial plane (*Z, R*):

$$(-Z_{JM}R_{JM}{}^2) = \text{const}_M, \qquad J = 0, 1, 2, 3 \dots n, \quad M = 0,1,2,3, \dots, m;$$

- in the azimuthal-and-radial plane (*Ψ, R*):

$$\Psi_M = \Psi_{\Sigma M} \pm (U_{\Psi,\Sigma,M}/2U_{R,\Sigma,M})[(R_{in,M}{}^2/R_{J,M}{}^2)-1], \quad J = 1,2,3, \dots, n, M = 0,1,2,3, \dots, m;$$

the sign of minus with coordinate *Z* in the longitudinal-and-radial plane (*Z, R*) is indicative of the direction of swirling flow toward negative values of coordinate *Z* in the selected alternative embodiment of tornado-type converter, i.e., below the base of tornado tower, and the $\pm$ sign in the expression for $\Psi_M$ in the azimuthal-and-radial plane (*Ψ, R*) points to the possibility of selecting any direction of rotation both counterclockwise (the plus sign) and clockwise (the minus sign).

The streams of heat-transfer agent flowing in the channels *21* or *73* (Fig. 11) are formed into a tornado-like jet which self-similarly sucks off the heat-transfer agent from the channels with cooled and heated magnetically soft material; in so doing, the spatial orientation, the geometric dimensions and shape of the stationary nozzles *20* or *72* and channels *21* or *73* are determined on the basis of exact solutions of basic unsteady-state hydrodynamic equations describing quasi-potential radially convergent swirling flows of viscous liquid which have the following form in cylindrical coordinates:

- in the longitudinal-and-radial plane (*R, Z*),

$$(\pm Z_i R_i{}^2) = \text{const}, \qquad i = 0, 1, 2, 3, \dots, n;$$

- in the azimuthal-and-radial plane (*R, Ψ*):

$$\Psi = \Psi_0 \pm (U_{F\Psi}/2U_{FR})[(R_{F,SM}{}^2/R_{i,SM}{}^2) - 1], \quad i = 1, 2, 3, \dots, n;$$

the $\pm$ sign indicates the direction of swirling flow toward negative or positive values of axis *Z* and the direction of swirling, and $\Psi_0$ defines the initial angle between the direction of velocity of heat-transfer agent and the radius of the power disk; in so doing, the guide unit of the hydraulic system of tornado-like cooling and heating of magnetically soft material is made such that the directions of symmetry axes of nozzles *20* or *72* (Fig. 11) delivering the heat-transfer agent to the cooled and heated channels and of channels *21* or *73* containing magnetically soft material would coincide and impart to the motion of heat-transfer agent the spatial orientation defined by the following angles:

- in the azimuthal-and-radial plane $(R, \Psi)$, by the local azimuth angle $\Psi_0$:

$$\Psi_0 = \text{arc tan}(U_{F,R}/U_{F,\Psi});$$

- in the longitudinal-and-azimuthal plane $(R,Z)$, by the local angle of elevation $\alpha_0$:

$$\alpha_0 = \text{arc cos}(U_{FZ}/U_{\Sigma,F}) = \text{arc cos}(U_{FZ}/U_{\Sigma,F}) = \text{arc cos}[U_{FZ}/(U_{F,\Psi}^2 + U_{FZ}^2 + U_{FR}^2)^{0.5}],$$

which makes the flow of continuous medium swirling with respect to vertical axis $Z$, where $U_{0R}$, $U_{0Z}$, and $U_{0\Psi}$ are the radial, longitudinal, and azimuthal components of velocity, respectively, and $U_{0F}$ is the total velocity of swirling flow:

$$U_{0F} = (U_{0\Psi}^2 + U_{0Z}^2 + U_{0R}^2)^{0.5}.$$

The technical result of the proposed invention is attained only within the foregoing relations, as is confirmed by the experimental results.

The proposed method of conversion of energy stored in low-potential heat fluxes, in permanent magnetic fields, and in magnetically soft materials is realized in the proposed converter as follows.

A magnetically soft material of density $\rho$, thermal conductivity $\lambda$, heat capacity $C$, and magnetization $\sigma(T, B)$ dependent on temperature $T$ and on induction of external magnetic field $B$ is placed in an external magnetic field generated by a magnet system *12* or *45* (Figs. 1 and 2), in which the field induction is varied in the preassigned direction $X$ from the minimal to maximal value to form the gradient of field induction $dB/dX \neq 0$; in so doing, the field pattern includes an adjacent zone in which the magnetic field is uniform, that is, $(dB/dX) = 0$, and has the induction $B = B_{max}$ which is maximal for the selected permanent magnet.

A layer of magnetically soft material of thickness $\delta = \rho_S/\rho$ in the form of plates, cylinders, and/or other three-dimensional shapes, which are located on a substrate of heat-insulating nonmagnetic material linearly or in a circle with constant surface density $\rho_S$, is heated in the zone with $dB/dX \neq 0$ and cooled in the zone with $dB/dX = 0$ to accomplish a magnetic phase transition of this material from the ferromagnetic to paramagnetic state under heating and from the paramagnetic to ferromagnetic state under cooling, thereby providing for the attraction of the cooled mass of magnetically soft material $m_{cold}$ to the zone where the magnetic field induction is maximal. The cooled mass of magnetically soft material expels from the magnet system the heated mass of magnetically soft material $m_{hot}$ which made a transition to the paramagnetic state, whereby the continuity of delivery of magnetically soft material into the zone with $dB/dX \neq 0$ is provided, as well as the translational or circular motion of the mass of magnetically soft material located on the substrate of heat-insulating nonmagnetic material.

This cycle provides for the conversion of the power of heat and energy stored in magnetic field to mechanical power or to power of other forms. In so doing, the heating and cooling of the mass of magnetically soft material is accomplished by turbulent flows of heat-transfer agents or by flows of heat-transfer agents with built-in self-organizing tornado-like jets which flow past the surfaces of layers of magnetically soft material, with the surfaces subjected to flow being made smooth or, for the purpose of intensifying the heating and/or cooling, being shaped by a relief in the form of alternating initially smooth segments and segments with curvilinear quadric surface in the form of recesses (dimples) *27* of double curvature, which consist of mating convex *28* and concave *29* parts, and the mating of dimples with initially smooth surface is accomplished using the convex part of the surface, the slopes of which have common tangents at all points of mating with the initially smooth surface and with the concave bottom part of the dimple surface; in so doing, the concave part of dimple is made smooth or with a fairing *56*.

The technical result of the proposed invention is attained only within the foregoing relations, as is confirmed by the experimental results.

Tornado-type turbines *8, 23, 40,* or *52* (Figs. 1 and 2) are characterized by the same blade profiles and structures and comprise a stationary body, the part of which in the proposed invention is played by either a convergent tower 1, or inner convergent channel *33,* or stationary convergent channel of tornado-type pump *22,* or stationary convergent channel of tornado-type pump *51*.

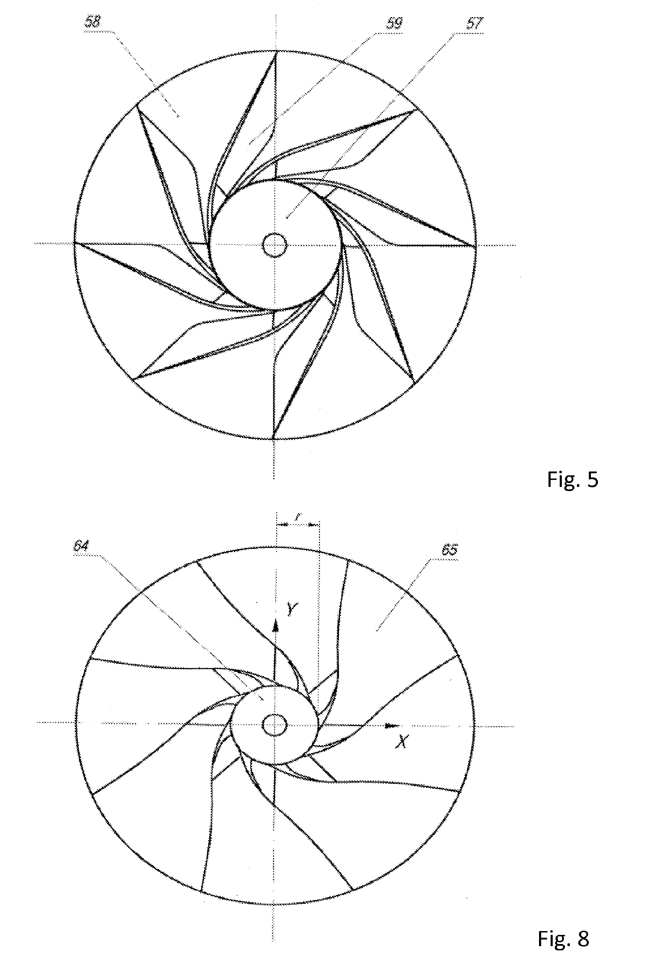

The tornado-type turbine further comprises a rotor *57* (Fig. 5) with blades *58* of longitudinal dimension $Z_i$ and radius $R_i$ variable along the turbine axis, said rotor being placed in the stationary body, the shape of the inner boundary surface of said body in the cylindrical coordinate system being defined by the relation:

$$Z_{\text{bodyi}}R_{\text{body}}{}^2 = \text{const};$$

in so doing, the turbine blades *58*, the inner side surface of the body, and the outer surface of the rotor *57* form interblade channels *59* which communicate with environment at the turbine ends, and the shape and spatial orientation of said channels in coordinates associated with the rotation axis of the turbine are defined by the relation:

$$\varphi(r, z) = \varphi(r, z_{\text{m}}) + (r_{\text{c}}z/r^2)(1 - z/2z_{\text{out}}) - k_{\omega}(z/r_{\text{c}}),$$

where

- *r, z,* and $\varphi$ are current cylindrical coordinates, the longitudinal axis *Z* of which coincides with the symmetry axis of the tornado tower *1* or *31* or of stationary convergent channels *22* or *51* (Figs. 1 and 2);
- $\varphi(r, z_{\text{in}})$ is the current azimuthal coordinate which defines the angle between the tangent to the wake of blade 58 (Figs. 5 and 6) and the current radius of the turbine on the plane crossing the blades and, on the normal, the rotation axis of the turbine; in so doing, the continuous medium flows into the interblade channels *59* via the plane crossing the blades *58* at longitudinal coordinate $z = z_{\text{in}}$, and the rotation axis coincides with the longitudinal coordinate axis *Z*;
- $\varphi(r, z_{\text{out}})$ is the azimuthal coordinate of the section of the turbine blades 58 at height $z_{\text{out}}$ by the plane crossing on a normal the rotation axis of the turbine, via the surface of which plane the continuous medium flows out from the interblade channels *59* of the turbine into the tower above the turbine;
- $r_{\text{c}}$ is the turbine radius; and
- $k_{\omega}$ is the rpm coefficient corresponding to the maximal value of power transferred by the tornado-like flow to the turbine blades.

The inner surface of the body and the surfaces of the rotor 57 and of the blades 58, which are subjected to the flow of continuous medium, are made smooth or with a relief in the form of segments of initially smooth surface alternating with curvilinear segments in the form of recesses (dimples) 27 of double curvature, which consist of mating quadric surfaces forming convex 28 and concave 29 slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing 56.

The technical result of the proposed invention is attained only within the foregoing relations, as is confirmed by the experimental results.

Tornado-type turbines *8, 23, 40,* or *52* (Figs. 1 and 2) are characterized by the same blade profiles and structures and comprise a stationary body, the part of which in the proposed invention is played by either a convergent tower 1, or inner convergent channel *33,* or stationary convergent channel of tornado-type pump *22,* or stationary convergent channel of tornado-type pump *51*.

The tornado-type turbine further comprises a rotor *57* (Fig. 5) with blades 58 of longitudinal dimension $Z_{\text{i}}$ and radius $R_{\text{i}}$ variable along the turbine axis, said rotor being placed in the stationary body, the shape of the inner boundary surface of said body in the cylindrical coordinate system being defined by the relation:

$$Z_{\text{bodyi}}R_{\text{body}}{}^2 = \text{const};$$

in so doing, the turbine blades *58,* the inner side surface of the body, and the outer surface of the rotor *57* form interblade channels *59* which communicate with environment at the turbine ends, and the shape and spatial orientation of said channels in coordinates associated with the rotation axis of the turbine are defined by the relation

$$\varphi(r, z) = \varphi(r, z_{\text{m}}) + (r_{\text{c}}z/r^2)(1 - z/2z_{\text{out}}) - k_{\omega}(z/r_{\text{c}}),$$

where

- *r, z,* and $\varphi$ are current cylindrical coordinates, the longitudinal axis *Z* of which coincides with the symmetry axis of the tornado tower *1* or *31* or of stationary convergent channels *22* or *51* (Figs. 1 and 2);
- $\varphi(r, z_{\text{in}})$ is the current azimuthal coordinate which defines the angle between the tangent to the wake of blade *58*

(Figs. 5 and 6) and the current radius of the turbine on the plane crossing the blades and, on the normal, the rotation axis of the turbine; in so doing, the continuous medium flows into the interblade channels *59* via the plane crossing the blades *58* at longitudinal coordinate $z = z_{in}$, and the rotation axis coincides with the longitudinal coordinate axis *Z*;

- $\varphi(r, z_{out})$ is the azimuthal coordinate of the section of the turbine blades 58 at height $z_{out}$ by the plane crossing on a normal the rotation axis of the turbine, via the surface of which plane the continuous medium flows out from the interblade channels *59* of the turbine into the tower above the turbine;
- $r_c$ is the turbine radius; and
- $k_\omega$ is the rpm coefficient corresponding to the maximal value of power transferred by the tornado-like flow to the turbine blades.

The inner surface of the body and the surfaces of the rotor *57* and of the blades *58,* which are subjected to the flow of continuous medium, are made smooth or with a relief in the form of segments of initially smooth surface alternating with curvilinear segments in the form of recesses (dimples) *27* of double curvature, which consist of mating quadric surfaces forming convex *28* and concave *29* slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing *56*.

The blades *58* of tornado-type turbine take up the pressure generated in the formed tornado-like flow largely by the azimuthal and longitudinal components of velocity, transfer the received force to the power shafts *6,* or *38,* or *60,* or *61* to convert the kinetic power of swirling flow to mechanical power; in so doing, the power shafts *6, 38, 60,* and *61* are mated with the electric generators *80* or *83.*

The technical result of the proposed invention is attained only within the foregoing relations, as is confirmed by the experimental results.

The tornado-type blowers *7,* or *39,* or *62,* or *63* exhibit identical blade profiles and structures and comprise each a stationary body, said body being provided in the present invention by the convergent tornado tower *1,* or by the inner convergent channel *33,* or by stationary convergent channel of the tornado-type pump *22,* or by stationary convergent channel of the tornado-type pump *51,* a rotor *64* with blades *65* of longitudinal dimension $Z_{body}$ and of radius $R_{body,i}$ variable along the blower axis; in so doing, the shape of the inner boundary surface of said body in the cylindrical coordinate system is defined by the relation:

$$Z_{body,I} R_{body,i}{}^2 = \text{const.}$$

The blower blades, the inner side surface of the body, and the rotor surface form channels which communicate with environment at the blower ends, and the shape and spatial orientation of the blades in cylindrical coordinates associated with the rotation axis of the rotor are defined by the relation:

$$f(r, z) = f(r, z_m) + (V_{z\pm}/V_{zp})[r_c z^2/2z_{fp} r^2 - k_{\omega p}(z/r_c)],$$

where

- *r, z,* and *f* are current cylindrical coordinates, the longitudinal axis *Z* of which coincides with the symmetry axis of the tower;
- $f(r, z_{in})$ is the current azimuthal coordinate which defines the angle between the tangent to the wake of blade *65* and the current radius *r* of the blower on the plane crossing the blower blades and, on the normal, the rotation axis of the blower; in so doing, the continuous medium flows into interblade channels *66* via the plane crossing the blades at longitudinal coordinate $Z = Z_{in}$, and the rotation axis of the blower coincides with the longitudinal coordinate axis *Z*;
- $r_c$ is the blower radius;
- $z_{in}$ is the coordinate of normal cross section of the rotation axis of the blower by the plane via the surface of which the continuous medium flows into the interblade space of the blower;
- $z_{fpt}$ is the coordinate of normal cross section of the rotation axis of the turbine by the plane via the surface of which the continuous medium flows out from the interblade space of the turbine;
- $k_{\omega p}$ is the rpm coefficient corresponding to the maximal value of power transferred by the blower blades to the tornado-like flow being formed;
- $V_{z\pm}$ is the longitudinal velocity of the medium flowing into the blower; and
- $V_{zp}$ is the longitudinal velocity of the medium flowing out from the blower;

in so doing, the inner surface of the body and the surface of the blades are made smooth or have the form of alternating segments of initially smooth surface and curvilinear segments in the form of recesses (dimples) *27* of double curvature, which consist of mating quadric surfaces forming convex *28* and concave *29* slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing.

The operation of tornado-type blower is supported by an autonomous energy source utilizing low-potential heat sources or thermal waste of anthropogenic activities, for example, magneto-thermal conversion of low-potential thermal energy and energy stored in magnetic field. In this embodiment, the rotor *64* of the blower with blades *65* is set on the power shaft *5* or *37* connected with the power disk of converter of magneto-thermal energy.

Collectors *67* of the cooling system of magneto-thermal converter are connected to the stationary nozzles *20* or *72* of the systems of heating and cooling the magnetically soft material on the power disk, which continuously deliver the heat-transfer agent at high velocity to moving channels with magnetically soft material, thereby causing in this material the phase transition from ferromagnetic to paramagnetic state; owing to this, the power disk *16* or *49* is rotated in the gradient field of magnet *47,* and the kinetic power of swirling tornado-like jet within the tornado tower *1* or *31* or within the stationary convergent channels *22* or *51* is converted to mechanical power.

The technical result of the proposed invention is attained only within the foregoing relations, as is confirmed by the experimental results.

INDUSTRIAL APPLICABILITY

The disclosed invention is aimed at developing a family of novel power plants capable of converting low-potential energy of renewable sources and of low-potential waste of anthropogenic activities to industrial-scale energy of various forms. The conversion methods and devices according to the disclosed invention utilize flows of continuous medium of a new class, which are quasi-potential axisymmetric, radially converging jets providing for saving of resources and autonomous environmentally clean, reliable, and safe generation of energy owing to conversion of the kinetic and thermal power of low-potential flows of continuum and solar radiation. The tornado-type method of conversion is suitable for household applications and for use in other spheres of economy, including newly developed factories, in expeditions, in settlements, in any regions of our planet, as well as in space stations and in the case of human landing on other planets in the future. The method of tornado-like conversion of energy of continuous medium and devices for its realization (embodiments) present a complex of technologies enabling one to decentralize the delivery of electrical and thermal energy to the housing-and-communal and industrial sectors of economy, as well as to remote and hard-of-access regions of our planet, including polar zones, islands, and mountainous regions, owing to the utilization of the method of tornado-like conversion of energy of continuous medium and devices for its realization, the converter of energy of solar radiation, the tornado-type blower, the tornado-type turbine, and methods and devices for magneto-thermal conversion of energy. The disclosed method of tornado-like conversion of kinetic and low-potential thermal power of continuous medium and devices for its realization are based on novel methods of accumulation and practical uses of environmental energy, first of all, low-potential energy such as energy of solar radiation stored in air, water, and soil under the effect of sunbeams, wind energy, geothermal energy, energy of thermal waste of human activities emitted to the environment in the form of hot flue gases, thermal waste of oil production and gas processing, of steam and nuclear power plants, and so on. Therefore, the present invention enables one to reduce the environmental effect of energy-related processes and significantly raise the efficiency and the functional and technical-and-economic effectiveness of conventional power engineering utilizing organic and nuclear fuel, including the recycling of low-potential heat discharged by steam and nuclear power plants to the atmosphere and/or water reservoirs.

The tornado-type blower may be used for generating swirling tornado-like jets, for example, in gas nozzles for raising the efficiency of fuel combustion, in ship building for concentrating the energy of propellers and other propulsion devices.

The tornado-type turbine may be used for conversion of energy of swirling flow, for example, in dry cooling towers when a swirling flow of air is formed in said towers owing to appropriate arrangement of heat exchangers, as well as in devices with flows exhibiting significant swirl.

In addition to the objectives disclosed in connection with this invention, the converter of solar energy may be used for heating water or air, for example, for communal and industrial needs.

The method and tornado-type device for conversion of magneto-thermal energy provide a basis for development of electrical-power units, engines, and propulsion devices, including those for automobile and water transport, magneto-thermal turbines, compressors, liquid-transfer pumps, combined electrical machines, and so on. An example of the efficiency of disclosed technology is provided by available laboratory samples of magneto-thermal converters of thermal energy to electric and/or mechanical energy. The properties of tornado-type magneto-thermal converters are of special value from the standpoint of providing energy for the industrial sphere, robotics, and human activities under extreme conditions. For example, tornado-type magneto-thermal converters may be used in lines of communication for transfer of natural gas and oil transported from the production site for processing and utilization. In particular, direct solar radiation is utilized, or low-potential heat accumulated in water, air, and soil heated by sun, or wind energy, or the heat of geothermal sources and, where possible, excess enthalpy of the medium being transferred.

Tornado-like jets (TLJ) represent a flow of new type discovered in Russia over quarter a century ago as a result of investigation of special features of flow of gases, liquids, and their mixtures past boundary surfaces of special forms. These flows are secondary tornado-like jets which, given necessary and sufficient conditions, are built into the environment and cause local changes of the dynamic state of this environment. The unique features of this flow, which manifest themselves by a surprisingly low level of hydraulic loss when flowing past surfaces and by as surprisingly high a level of the rate boundary transfer of mass, heat, and momentum, define the high interest in practical utilization of this phenomenon. Even now a series of diverse energy-related and transport units utilizing the TLJ technology have been developed and are employed. For example, experimental and series-produced gas-turbine aircraft engines and stationary power gas turbines with a significantly increased level of blade cooling have been developed at present, as well as experimental uranium fuel elements, diverse power boilers, and other equipment utilizing these flows. All of the units and equipment listed above acquired explicit and significant functional and technical-and-economic advantages compared to conventional analogs. In addition, the tornado-type technologies made it possible to enhance heat transfer in the processes of boiling and condensation, significantly reduce the cavitation damage to the surface, reduce the acoustic effects in these processes, and reduce the surface wear in friction pairs of metal against metal or metal against nonmetal surface.

**Claims**

1. A method of tornado-type conversion of the energy of continuous medium, which is character-rized in that the continuous medium from the environment is delivered along a plurality of trajectories into an axisymmetric region $Q_\Sigma$ which has the shape of convergent channel, a height $Z_{\text{out}}$, and a height-variable radius

$$R_{\text{in}} \geq R \geq R_{\text{out}},$$

or of K several nested convergent channels, each having a volume $Q_K$, a height $Z_{K,\text{out}}$, and a height-variable radius $R_{J,K}$ varying in the range

$$R_{K,\text{in}} \geq R \geq R_{K,\text{out}};$$

in so doing, the regions $Q_\Sigma$ and $Q_K$ have inlet and outlet parts on boundary surfaces $\Sigma_Q$ and $\Sigma_{QK}$, respectively, and the height and radius of said regions are selected such that the following relations would be valid everywhere on the boundaries $\Sigma_Q$ and $\Sigma_{QK}$ and within the region $Q_\Sigma$

$$R_{\text{in}}{}^2 Z_{\text{in}} = R_{\text{i},\Sigma}{}^2 Z_{\text{i},\Sigma} = R_{\text{out}}{}^2 Z_{\text{out}} = \text{const}_\Sigma, \quad i = 0, 1, 2, 3, \ldots, \text{p}$$

$$R_{J,K}{}^2 Z_{J,K} = \text{const}_K, \qquad\qquad J = 0, 1, 2, 3, \ldots, \text{s,}$$

where Z, R, and $\Psi$ are cylindrical coordinates, the center of which is located at the point of intersection of the longitudinal symmetry axis of the selected axisymmetric region with the base of said region, the subscript "in" is assigned to cylindrical coordinates $Z_{\text{in}}$, $R_{\text{in}}$, and $\Psi_{\text{in}}$ which belong to the inlet part of the boundary surface $\Sigma_Q$, and the subscript "i, $\Sigma$" points to its belonging to any ith point of the region $Q_\Sigma$ bounded by the surface $\Sigma_Q$, the subscript "out" assigned to cylindrical coordinates $Z_{\text{out}}$, $R_{\text{out}}$, and $\Psi_{\text{out}}$ indicates that they belong to the outlet part of the boundary surface $\Sigma_Q$, the subscript "J,K" indicates the position of any Jth point on the surface $\Sigma_{QK}$ of the Kth convergent channel within the volume $Q_\Sigma$ bounded by the surface $\Sigma_Q$, the subscripts "$\Sigma$" and "J" assigned to constants "const" indicate that const$_\Sigma$ belongs to the volume $Q_\Sigma$ enclosed within the boundary surface $\Sigma$, and const$_K$ - to the volume $Q_K$ bounded by the boundary surface of the convergent channel within the region $Q_\Sigma$; in so doing, the trajectories of the medium moving in the inlet part of the boundary surface $\Sigma$ are directed into the region $Q_\Sigma$ at a local azimuth angle $\Psi_{0\Sigma}$ which defines within the region $Q_\Sigma$, as well as within the convergent channels $Q_K$, the initial swirling of flow of continuous medium with respect to radius $R_{in}$, and at local angles of elevation $\alpha_{0\Sigma}$ and $\alpha_{0,\Sigma QK}$ with respect to the direction of symmetry axis of said region, the selected spatial orientation of said surfaces providing for the formation of jets, the confluence of which in the axisymmetric region $Q_\Sigma$, as well as in the convergent channels $Q_K$, provides for radial convergence and tornado-like swirling of flow of continuous medium delivered to these regions; in so doing, the swirling flow being formed is quasi-potential and moves in a channel or channels of convergent shape with their cross section decreasing from the inlet to outlet part to be imparted acceleration which causes an increase in the flow velocity and in the pressure difference between the medium in external space and the medium in the region $Q_\Sigma$, as well as in the convergent channels $Q_K$, whereby the velocity $U_{in}$ of flow into this region is increased and the kinetic power of flow is concentrated in the accelerating swirling jet, the maximum of said kinetic power being attained in the region $Q_\Sigma$; the zone with radius $R_{\Sigma max}$ and longitudinal coordinate $Z_{\Sigma max}$, in which the equality of longitudinal component of velocity $U_Z$ and azimuthally velocity $U_\Psi$ is attained, the heights $Z_{KQ}$ being selected such that the longitudinal coordinate of said zone would exceed the longitudinal coordinates of any "$K$th" convergent channel within said zone

$$Z_\Sigma > Z_{QK},$$

accommodates at this height a zone of conversion of kinetic power of swirling flow to mechanical power transferred to the turbine shaft; the deceleration and loss of swirling in the tornado-like flow which passed said zone and gave up a part of its kinetic energy to turbine blades is taken into account, and the deceleration of the flow is compensated for by way of locating a compression zone in the region $Q_\Sigma$ in the space between stationary guide surfaces and the zone of conversion of kinetic power of swirling flow to mechanical power, said compression zone causing an increase in the velocity $U_{in}$ in this part and, indirectly, in the inlet part of the boundary surface $\Sigma_Q$, as well as an increase in the velocity $U_{out}$ in the outlet part of the boundary surface $\Sigma$; in so doing, the increase in the velocity $U_{out}$ with respect to the velocity $U_{in}$ of the flow into the $Q_\Sigma$ region is defined by the ratio of the radius of the outlet part $R_{out}$ to the dimensions of the inlet part $Z_{in}$ of the boundary surface $\Sigma_Q$ transverse with respect to the direction of inward flow

$$U_{in}/U_{out} = R_{out}/n\ Z_{in},$$

where $n$ is determined in the $1 \leq n \leq 20$ range, and the radii $R_{in}$ and $R_{out}$ of the region $Q_\Sigma$ are determined in the range

$$1{,}5 \leq R_{in}/R_{out} \leq 7.5$$

the energy of inflowing continuous medium, the heat of solar radiation and/or of any low-potential source of heat, and the energy stored in the magnetic field of permanent magnets and in magnetically soft materials are used for forming a swirling flow; in so doing, the surfaces of the internal boundary $\Sigma_Q$, of the fairing, and of the movable and stationary elements of guide unit, which are subjected to the flow of continuous medium within the region $Q_\Sigma$, are formed by recesses (dimples) of double curvature, which are curvilinear quadric surfaces alternating with regions of initially smooth surface; in so doing, the mating of dimples with initially smooth surfaces is accomplished using the convex parts of their surfaces, the slopes of which have common tangents at all points of mating with the smooth surface and at all points of mating with the concave part of the dimple surface; in so doing, the concave part of dimple is made smooth or with a fairing.

2. A method as claimed in Claim 1, in which the ratio of depth $h_c$ of dimples to their dimension $L_{LC}$ along the direction of flow is found in the range

$$0{,}001 \leq h_c/L_{LC} \leq 0.2,$$

and the ratio of longitudinal dimension $L_{LC}$ of dimple to transverse dimension $L_{BC}$ of dimple is in the range

$$0,25 \leq L_{LC}/L_{BC} \leq 1,25,$$

with the surface density f of dimples being in the range

$$0,1 \leq f \leq 0.95,$$

where the subscripts "LC" and "BC" indicate the longitudinal and transverse dimensions along and across the flow, respectively.

3. A method as claimed in Claim 2 in so doing, the velocity of tornado-like swirling flow in the inlet part of boundary $\Sigma_Q$ of region $Q$ and at any Jth point on the surface of Jth convergent channel within said region is defined by the relations

$$U_{in} = (U_{\Psi,\Sigma}{}^2 + U_{Z,\Sigma}{}^2 + U_{R,\Sigma}{}^2)^{0.5} \quad \text{and} \quad U_{J,K} = (U_{\Psi,J,K}{}^2 + U_{Z,J,K}{}^2 + U_{R,J,K}{}^2)^{0.5},$$

respectively; in so doing, the local azimuth angle $\Psi_0$ and the local angle of elevation $\alpha_{0\Sigma}$ are defined by the relations

$$\Psi_0 = \text{arc tan } (U_{\Psi,\Sigma}/U_{R,\Sigma}) \quad \text{and} \quad \alpha_{0\Sigma} = \text{arc cos } (U_{Z,in}/U_{\Sigma,in}),$$

respectively; in so doing, the angle $\alpha_{0\Sigma}$ is formed by a guide surface which contacts the axisymmetric surface $\Sigma_Q$ at any point whose coordinates $R_{i,\Sigma}$ and $Z_{i,\Sigma}$ are in the ranges

$$3.5 \, R_{out} \leq R_{i,\Sigma} \leq 4.5 \, R_{out} \quad \text{and} \quad 0.05 \, Z_{out} \leq Z_{i,\Sigma} \leq 0.08 \, Z_{out},$$

and the angles of elevation $\alpha_{0,\Sigma 0K}$, at which the continuous medium is delivered to any "Kth" convergent channel, are formed by using guide surfaces the points of contact of which with the axisymmetric surfaces $\Sigma_K$ have coordinates $R_{J,K}$ and $Z_{J,K}$ determined in the same ranges

$$3.5 R_{K,out} \leq R_{J,K} \leq 4.5 R_{K,out} \quad \text{and} \quad 0.05 \, Z_{K,out} \leq Z_{J,K} \leq 0.08 \, Z_{K,out},$$

which provides for the formation in the selected region $Q$ of a tornado-like quasi-potential swirling flow with the velocity components $U_R$, $U_Z$, and $U_\Psi$ being defined within the region by the following relations: along the radius of region $Q_\Sigma$

$$U_R = - C_0(t) \, R_{i,\Sigma}$$

in the inlet cross section on the boundary $\Sigma_Q$

$$U_R = - C_0(t) \, R_{in},$$

in the inlet cross section of any Kth convergent channel
on the boundary $\Sigma_K$

$$U_{R,J,K} = - C_0(t)\, R_{J,K}$$

along the region $Q$

$$U_Z = 2C_0(t)\, Z_{i,\Sigma}$$

at any $J$-th point within any "$K$-th" convergent channel

$$U_{Z,J,K} = 2C_0(t)\, Z_{J,K};$$

on the azimuth of region $Q$:

$$U_{i,\Psi} = [\Gamma_0(t)/R_{i,\Sigma}]\, [1 - \exp(-C_0(t)R_{i,\Sigma}^2/2v)],$$

on the boundary $\Sigma$:

$$U_{\Psi\Sigma} = [\Gamma_0(t)/2\pi R_{in}]\, [1 - \exp(-C_0(t)\, R_{in}^2/2v)],$$

on the boundary $\Sigma$ at any $J$-th point of "$K$-th" convergent channel:

$$U_{\Psi\Sigma} = [\Gamma_0(t)/2\pi R_J]\, [1 - \exp(-C_0(t)R_J^2/2v)],$$

where $\Gamma_0(t)$ is the time-dependent circulation of the medium in tornado-like vortex; in so doing, the swirling flow radially converges on the symmetry axis of region $Q$ as the radius $R_{i,\Sigma}$ of region $Q_{\Sigma}$ decreases, including the point $R_{in}$ on the boundary surface $\Sigma$, which is indicated by the sign of minus in the time-dependent expression for radial gradient of velocity of tornado-like flow $C_0(t) = - (U_R(t)/R_{i,\Sigma})$; in so doing, $C_0(t)$ and $\Gamma_0(t)$ vary following the variation in time of the velocity $U_{in}$ of the flow into the region $Q$, and the power of the formed tornado-like quasi-potential jet increases proportionally with $N_{out} \sim U_{out}^3$ with the energy balanced between its concentrated amount in the formed tornado-like flow and the energy of the medium flowing into the region $Q$ via boundary surface $\Sigma$.

4. A tornado-type converter of energy (alternative embodiment 1), which is **characterized in that** it comprises

   • an axisymmetric convergent tornado tower equipped with

   • receivers of flows of continuous medium,
   • an internal axisymmetric convergent fairing located along the symmetry axis of the tower,
   • a stationary guide unit with blades arranged about the symmetry axis of the tower and rigidly connected with the external convergent surface of said tower and with said fairing,
   • an upper rotating power shaft and a lower rotating power shaft, the symmetry axes of said shafts coinciding with the symmetry axis of said tower,
   • a tornado-type blower mounted above said stationary guide unit,
   • at least one tornado-type turbine which is rigidly connected with one of said power shafts and mounted along the symmetry axis of the tower in a zone of radius $R_{Nmax}$ and longitudinal coordinate $Z_{Nmax}$, in which zone the equality of the longitudinal, $U_Z$, and azimuthal, $U_\psi$, components of velocity is attained;

   • converters of solar energy;
   • a tornado-type converter of magneto-thermal energy, which is located beneath said stationary guide unit, has a common symmetry axis with said tornado tower, and is provided with

• a magnet system consisting of a gradient magnet and a magnet with uniform magnetic field,
• a movable power disk which carries channels with a magnetically soft working material, said channels serving the function of the guide unit of tornado-type system of heating and cooling of magnetically soft material,
• a power shaft rigidly connected with said power disk and with said tornado-type blower in said tornado tower,
• a tornado-type system of heating and cooling of magnetically soft working material, which is mounted along the symmetry axis of said tornado-type converter and beneath said stationary guide unit and comprises a tornado-type pump and at least one tornado-type turbine for converting the energy of tornado-like jet of heat-transfer agent;

• base-mounted supports and load-bearing structures;

in so doing, said axisymmetric convergent tornado tower consists of at least one convergent channel with height-variable radius $R$ and is a body of volume $Q$ open into environment in the tower zones of maximal and minimal radii, with the continuous medium entering and leaving the tower via said zones, respectively; in so doing, said tower has a height $Z$ and inner boundary surface $\Sigma$, the shape of which corresponds to quadratic hyperbola so that the geometric dimensions of the tower at its any height and in its any internal cross section are related by the relation

$$R^2 Z = \mathrm{const}$$

in so doing, the surfaces of the convergent tower, of the external boundary of the fairing, of the stationary elements of the guide unit with blades, of the blades of said tornado-type blower, and of the blades of tornado-type turbines, which are subjected to the flow of continuous medium within the region $Q$, are made smooth or have the form of alternating smooth surface segments and curvilinear segments in the form of recesses (dimples) of double curvature on the surface, which consist of mating quadric surfaces forming convex and concave slopes, with the mating of dimples with smooth surfaces being accomplished using the convex slopes of the dimples, which have common tangents at all points of mating with the smooth surface and with the surface of the concave part of the dimple; in so doing, the concave part of dimple is made smooth or with a fairing.

5. A converter as claimed in Claim 4, in which the ratio of depth $h_c$ of dimples, reckoned from the level of initially smooth surface, to their dimension $L_{LC}$ along the direction of flow is in the range

$$0.001 \leq h_c/L_{LC} \leq 0.5,$$

and the ratio of longitudinal dimension $L_{LC}$ of dimple to transverse dimension $L_{BC}$ of dimple is in the range

$$0.25 \leq L_{LC}/L_{BC} \leq 125,$$

with the surface density f of dimples being in the range

$$0,1 \leq f \leq 0.95,$$

where the subscripts "LC" and "BC" indicate the longitudinal and transverse dimensions of dimples along and across the flow, respectively.

6. A converter as claimed in Claim 4 in which the axisymmetric fairing is mounted along the symmetry axis of the tornado tower, said fairing being a body of revolution, the projection of which onto a longitudinal-and-radial plane ($R$, $Z$) has the shape of quadratic hyperbola defined by the relation

$$R_{J,F}{}^2 Z_{J,F} = \mathrm{const}, \quad J = 0, 1, 2, 3, \ldots, n,$$

where $R_{J,F}$ and $Z_{J,F}$ denote the fairing radius and height, respectively, and the ratio of the maximal radius of outer boundary surface of the fairing $R_{n,F}$ to the maximal radius of the tower $R_{in}$ lies in the range

$$0.03 \leq (R_{n,F}/R_{in}) \leq 0.3$$

in so doing, said fairing has an opening, the center of which lies on the symmetry axis of the tower and is mated with the power disk,

7. A converter as claimed in Claim 4 and the guide unit of tornado tower has blades, the shape of which is defined by the following relations
in the longitudinal-and-radial plane ($R$, $Z$)

• along the radius of tornado tower on the boundary Σ

$$Z_\Sigma R_\Sigma^2 = \text{const},$$

• at any $K$-th point of the "$J$-th" surface within the selected region $Q$:

$$Z_{K,J} R_{K,J}^2 = \text{const}, \qquad J = 0, 1, 2, 3, \ldots, n; K = 0, 1, 2, 3, \ldots, m,$$

in the azimuthal-and-radial plane (Ψ, $R$)
• on the azimuth of tornado tower on the boundary Σ

$$\Psi_\Sigma = \arctan (U_{\Psi,\Sigma}/U_{R,\Sigma}),$$

• at any $K$-th point of the Jth surface within the selected region $Q$

$$\Psi = \Psi_\Sigma + (U_{\Psi,\Sigma}/2U_{R,\Sigma})[(R_{in}/R_{K,J})^2 - 1], J = 1, 2, 3, \ldots, n; K = 0, 1, 2, 3, \ldots, m,$$

where $R$, $Z$, and Ψ are cylindrical coordinates of the tornado tower, and $U$ is the velocity of flow of continuous medium; the subscripts "Σ", "in", and "K,J", "Ψ, Σ", "R, Σ", and "Z, Σ" assigned to coordinates point to their belonging to the inner boundary surface Σf of the tornado tower and to any $K$th point of the $J$th surface within the selected region $Q$, and the subscripts "Ψ, Σ", "R, Σ", and "Z, Σ" assigned to velocities correspond to the values of azimuthal, longitudinal, and radial velocity, respe-ctively.

8. A tornado-type converter of energy (alternative embodiment 2), which is **characterized in that** said converter comprises an axisymmetric convergent tornado tower consisting of at least two axisymmetric convergent channels (outer and inner ones), with the outer convergent channel of said tornado tower being made of an optically transparent material and having a height $Z_{opt}$ and inner boundary surface $\Sigma_{opt}$, the shape of which corresponds to quadratic hyperbola so that the geometric dimensions of the tower at its any height $Z_{i,opt}$ and in its any internal ith cross section of radius $R_{i,opt}$ are related by the relation

$$R_{i,opt}^2 Z_{i,opt} = \text{const}_{opt},$$

where $\text{const}_{opt}$ is common to all points on the inner surface of said outer convergent channel, and said inner convergent channel is made of a material exhibiting a high value of coefficient of absorption of solar radiation and serves for heating the medium in the space between said outer and inner convergent channels and, indirectly, within said inner convergent channel; in so doing, the solar radiation is directed onto the optically transparent convergent channel directly and/or by means of concentrators of solar radiation in the form of mirrors, and/or by means of concentrators provided on the optically transparent boundary surface $\Sigma f_{opt}$ of said outer convergent channel in the form of recesses (dimples); in so doing, said dimples are imparted the shape of quadric surfaces of double curvature, while the surfaces of said convergent channels, of said inner fairing, of the stationary elements of said guide unit, of the blades of said tornado-type blower, and of the blades of tornado-type turbines, which are subjected to the flow of continuous medium within the region $Q$, are made smooth or have the form of alternating smooth segments of the initial surface and of curvilinear segments in the form of recesses (dimples) of double curvature, which consist of mating quadric surfaces forming convex and concave slopes, with the mating of dimples with smooth surface segments being accomplished using the convex slopes of the dimples, which have common tangents at all points of mating with the smooth surface and with the surface of the concave part of the dimple; in so doing, the concave part of dimple is made smooth or with a fairing, and

> • the tower is equipped with
>
>> • receivers of incoming flows of continuous medium,
>> • an internal axisymmetric convergent fairing located along the symmetry axis of the tower,
>> • a stationary guide unit with blades arranged about the symmetry axis of the tower and rigidly connected with the fairing and with the surface of the convergent channels;
>
> • converters of solar energy, which consist of a system for heating the continuous medium confined between the optically transparent boundary surface of the outer convergent channel and the solar heat-absorbing surface of the inner convergent channel,
> • solar heaters of the heat-transfer agent,
> • solar batteries for direct conversion of solar radiation to electricity;
> • a tornado-type converter of magneto-thermal energy, which is provided with
>
>> • a magnet system comprising a gradient magnet and a magnet with uniform magnetic field,
>> • a movable power disk which carries channels with a magnetically soft working material, said channels serving the function of guide unit of the tornado-type system of heating and cooling of magnetically soft material,
>> • a power shaft rigidly connected with said power disk, with the fairing of tornado-type converter, and with the blower in the tornado tower,
>> • a tornado-type system of heating and cooling of magnetically soft working material, which is mounted along the symmetry axis of the tornado-type converter and beneath said movable power disk and includes a tornado-type pump and at least one tornado-type turbine for converting the energy of tornado-like jet of heat-transfer agent;
>
> • base-mounted supports and load-bearing structures;

in so doing, said axisymmetric convergent channels of the tornado tower have height-variable radii R, are open into environment at the tower base in the zone of maximal radius and at the uppermost point of the tower, where the convergent channel radius is minimal, with the continuous medium entering and leaving the convergent channel assembly via said zones, respectively.

**9.** A converter as claimed in Claim 8, in which the ratio of depth $h_c$ of dimples, reckoned from the level of initially smooth surface, to their dimension $L_{LC}$ along the direction of flow is in the range

$$0{,}001 \leq h_c/L_{LC} \leq 0{,}5,$$

and the ratio of longitudinal dimension $L_{LC}$ of dimple to transverse dimension $L_{BC}$ of dimple is in the range

$$0{,}25 \leq L_{LC}/L_{BC} \leq 1{,}25,$$

with the surface density $f$ of dimples being in the range

$$0.1 \leq f \leq 0.95$$

10. A converter as claimed in Claim 8 in which, the axisymmetric fairing is mounted along the symmetry axis of tornado tower and is a body of revolution, the projection of which onto a longitudinal-and-radial plane ($R$, $Z$) has the shape of quadratic hyperbola defined by the relation:

$$R_{\text{J,F}}{}^{2} Z_{\text{J,F}} = \text{const}, \quad J = 0, 1, 2, 3, \ldots, n,$$

where $R_{\text{J,F}}$ and $Z_{\text{J,F}}$ denote the fairing radius and height, respectively, and the ratio of the maximal radius of external boundary surface of the fairing $R_{\text{n,F}}$ to the maximal radius of the tower $R_{\text{in}}$ lies in the range

$$0{,}03 \leq (R_{\text{n,F}}/R_{\text{in}}) \leq 0.3$$

in so doing, the fairing has an opening, the center of which lies on the symmetry axis of the tower and through which passes a power shaft connecting the blower rotor with the power disk of the tornado-type converter of low-potential heat to mechanical power,

11. A converter as claimed in Claim 8 and in which the guide unit of the tornado tower has blades, the shape of which is defined by the following relations
in the longitudinal-and-radial plane ($R$, $Z$)

    • along the radius of tornado tower

$$Z_{\Sigma} R_{\Sigma}{}^{2} = \text{const},$$

    • at any $J$th point of any $K$th convergent channel

$$Z_{\text{K,J}} R_{\text{K,J}}{}^{2} = \text{const}, \quad J = 0, 1, 2, 3, \ldots, n, \quad K = 0, 1, 2, 3, \ldots, m;$$

in the azimuthal-and-radial plane ($\Psi$, $R$) -
    • on the azimuth of tornado tower on the boundary $\Sigma$

$$\Psi_{\Sigma} = \text{arc tan}\ (U_{\Psi,\Sigma}/U_{\text{R},\Sigma}),$$

    • at any point within the tornado tower, including any $K$th convergent channel

$$\Psi = \Psi_{\Sigma} + (U_{\Psi,\Sigma}/2U_{\text{R},\Sigma})[(R_{\text{in}}/R_{\text{i},\Sigma})^{2} - 1], \quad i = 1, 2, 3, \ldots, n,$$

where $R$, $Z$, and $\Psi$ are cylindrical coordinates of the tornado tower and $U$ is the velocity of flow of continuous medium; the subscripts "$\Sigma$", "in", and "i" indicate the coordinates in the volume of the tornado tower, and the subscripts "$\Psi$, $\Sigma$" and "R, $\Sigma$" indicate the velocities on the inner boundary surface $\Sigma$ of the tornado tower and at any ith point within the selected region $Q_{\Sigma}$.

**12.** A converter of solar energy, which is **characterized in that** said converter includes a hermetic housing with channels provided therein side; in so doing, said housing is heat-insulated on all sides, except for the side coated with one or several layers of optically transparent heat insulation, on which the solar radiation flux is incident, with blackened metal outer surfaces of channels which take up solar radiation being made either of smooth or shaped plates or of pipes; in so doing, a heat-transfer agent heated by solar radiation is passed in the thus formed channels; for this purpose, the outer surfaces of channels and the surfaces of optically transparent insulation facing the inside of said hermetic housing are imparted the shape of alternating segments of curvilinear quadric surface in the form of recesses (dimples) of double curvature and initially smooth segments, which consist of mating convex and concave parts of the dimples, with the mating of dimples with smooth surface segments being accomplished using the convex parts of the dimples, the slopes of which have common tangents at all points of mating with the smooth surface and with the surface of the concave part of the dimple; in so doing, the concave part of dimple is made smooth or with a fairing, and the ratio of depth $h_c$ of dimples on the channel surface to their dimension $L_{LC}$ along the direction of flow is in the range

$$0.001 \leq h_c/L_{LC} \leq 0.3,$$

and the ratio of longitudinal dimension $L_{LC}$ of dimple to transverse dimension $L_{BC}$ of dimple is in the range

$$0.25 \leq L_{LC}/L_{BC} \leq 1.25,$$

with the dimples arranged on the surface with density $f$ in the range

$$0.05 \leq f \leq 0.5,$$

and the ratio of depth $h_c$ of dimples on the optically transparent surface to their diameter $d_c$ is in the range

$$0.01 \leq h_c/d_c \leq 0.5,$$

with the dimples arranged on the surface with density $f$ in the range

$$0.1 \leq f \leq 0.95.$$

**13.** A method of magneto-thermal conversion of energy stored in permanent magnetic fields, in magnetically soft materials, and in low-potential heat fluxes, which is **characterized in that** a magnetically soft material of density ρ, thermal conductivity λ, heat capacity $C$, and magnetization σ($T$, $B$) dependent on temperature T and on induction of external magnetic field $B$ is placed in an external magnetic field generated by a magnet system, in which the field induction is varied in the preassigned direction $X$ from the minimal to maximal value to form the field gradient $dB/dX \neq 0$, and by a magnet in which the magnetic field is uniform (($dB/dX$) = 0) and has the intensity $B = B_{max}$ which is maximal for the selected permanent magnet; in so doing, a layer of magnetically soft material of thickness δ = ρ_S/ρ in the form of plates, cylinders, and/or other three-dimensional shapes, which are located on a substrate of heat-insulating nonmagnetic material linearly or in a circle with constant surface density ρ_S, is heated in the zone in which $dB/dX \neq 0$ and cooled in the zone in which $dB/dX = 0$ to accomplish a magnetic phase transition from the ferromagnetic to paramagnetic state under heating and from the paramagnetic to ferromagnetic state under cooling, thereby providing for the attraction of the cooled mass of magnetically soft material $m_{cold}$ to the zone where the magnetic field induction is maximal and for the expulsion from this zone of the heated mass of magnetically soft material $m_{hot}$ which made a transition to the paramagnetic state, whereby the continuity of delivery of magnetically soft material into the zone with $dB/dX \neq 0$ is attained and the translational or circular motion of the mass of magnetically soft material is provided, said motion causing the conversion of the power of magnetic attraction to mechanical power or to power of other forms; in so doing, the heating and cooling of the mass of magnetically soft material is accomplished by turbulent flows of heat-transfer agents or by flows of heat-transfer agents with built-in self-organizing tornado-like jets which flow past the surfaces of layers of magnetically soft material, with the surfaces subjected to flow being made smooth or being shaped by a relief in the form of alternating initially smooth segments and segments with curvilinear quadric surface in the form of recesses (dimples) of double curvature, which consist of mating convex and concave parts, and the mating of dimples with initially smooth surface is accomplished using the convex part of the surface, the slopes of which have common tangents at all points of mating with the initially smooth surface and with the concave bottom part of the dimple surface; in so doing, the concave part of dimple is made smooth or with a fairing.

14. A tornado-type converter of magneto-thermal energy, which is **characterized in that** said converter comprises a magnet system with a set of permanent magnets of different magnetic field intensities and magnetic circuits arranged so that the magnetic field intensity varies from the minimal value at the inlet to the magnet to the maximal value at the end of the field, and a magnetically soft material located in channels formed between a disk made of a nonmagnetic heat-insulating material and a coaxial ring made of the same material and with the outside radius equal to that of the disk; in so doing, the magnetically soft material is arranged in the form of plates of height $h_M$ and thickness $\delta_M$ vertically between said disk and said ring to serve the function of the side walls of channels rotating together with the disk in the magnetic field of gradient magnet; in so doing, the converter is provided with a hydraulic system of tornado-like cooling and heating with a tornado-type pump consisting of an axisymmetric stationary tornado-type convergent channel, any longitudinal cross section of which containing the symmetry axis of the convergent channel is a quadratic hyperbola for which the equality $Z_i R_i^2 = \mathrm{const}_P$ is valid in any transverse cross section with longitudinal coordinate $Z_i$ and radius $R_i$ corresponding to said coordinate; in so doing, the guide unit of said hydraulic system of tornado-like cooling and heating of magnetically soft material comprises stationary nozzles, movable blades, and a fairing, with the side walls of the channels with the working magnetically soft material in the initial section of the blades being a constituent part of the surface of said blades; in so doing, all surfaces subjected within the stationary tornado-type convergent channel to flow by nominally cold and nominally hot heat-transfer agents, including the surfaces of plates of magnetically soft material, have a relief in the form of alternating initially smooth segments and segments with curvilinear quadric surface in the form of recesses (dimples) of double curvature, which consist of convex and concave parts of the curvilinear surface of dimples mating with one another and with initially smooth surface by means of the convex part of relief, the slopes of which have common tangents at all points of mating with the initially smooth surface and with the concave bottom part of the dimple surface; in so doing, the concave part of dimple is made smooth or with a fairing.

15. A converter as claimed in Claim 14, which comprises a system for tornado-like cooling and heating of the magnetically soft material with a system for recycling of water into the environment after its utilization and decrease in its temperature upon the mixing of the heating and cooling streams; in so doing, the energy and temperature characteristics of the heating and cooling streams delivered from the stationary nozzles to the channels for heating and cooling of said material, which are located on a rotating disk of nonmagnetic heat-insulating material, provide for magnetic phase transitions in the selected magnetically soft working material, with the shape of the boundary surfaces of nozzles and of the movable channels mated with said surfaces and receiving the streams of heat-transfer agent being defined by the following relations:

• in the longitudinal-and-radial plane ($Z$, $R$)

$$(-Z_{JM} R_{JM}{}^2) = \mathrm{const}_M, \qquad\qquad J = 0, 1, 2, 3, \ldots, n, \ M = 0, 1, 2, 3, \ldots, m;$$

• in the azimuthal-and-radial plane ($\Psi$, $R$)

$$\Psi_M = \Psi_{\Sigma M} \pm (U_{\Psi,\Sigma,M}/2U_{R,\Sigma,M})[(R_{\mathrm{in},M}{}^2/R_{J,M}{}^2) - 1], \ \ J = 1,2,3,\ldots, n, M = 0,1\,2,3, \ldots, m;$$

the sign of minus with coordinate $Z$ in the longitudinal-and-radial plane ($Z$, $R$) is indicative of the direction of swirling flow toward negative values of coordinate $Z$ in the selected alternative embodiment of tornado-type converter, i.e., below the base of tornado tower, and the $\pm$ sign in the expression for $\Psi_M$ in the azimuthal-and-radial plane ($\Psi$, $R$) points to the possibility of selecting any direction of rotation both counterclockwise (the plus sign) and clockwise (the minus sign);

16. A converter as claimed in Claim 14, which (so doing), the spatial orientation of the symmetry axis of each stationary nozzle is conjugate with the spatial orientation of the symmetry axis and shape of the movable channels with the magnetically soft material and has the following form in the cylindrical coordinates:

- in the longitudinal-and-radial plane ($Z$, $R$)

$$(\pm Z_{J,M} R_{J,M}{}^2) = \text{const}, \quad J = 0, 1, 2, 3, \ldots, n, \quad M = 0, 1, 2, 3, \ldots, m;$$

- in the azimuthal-and-radial plane ($\Psi$, $R$)

$$\Psi_M = \Psi_{\Sigma M} \pm (U_{\Psi,\Sigma,M}/2U_{R,\Sigma,M})[(R_{in,M}{}^2/R_{J,M}{}^2) - 1], \quad J = 1,2,3, \ldots, n, M = 0,1,2,3, \ldots, m;$$

17. A converter as claimed in Claim 14, in which the magnet systems are located at least at two opposite points on the disk diameter so that the magnetically soft material is cooled down in the magnetic field of gradient magnet by means of stationary nozzles mounted in a zone taking up the space between the segment with minimal magnetic field intensity $H \sim H_{min}$. and the segment with magnetic field intensity $H \sim 0.95 H_{max}$, and the heating of the working medium is provided by stationary nozzles which are located inside of the gradient magnet and take up the space between the zone of magnetic field intensity $H \sim 0.95 H_{max}$ and the zone in which the magnetic field intensity is uniform and reaches a maximum $H \sim H_{max}$

18. A converter as claimed in Claim 14, in which the cooling and heating of magnetically soft material in said converter is accomplished using either a heat pump or any natural source of low-potential energy, for example, a collector of filtered nominally cold water of creeks, rivers, or fresh-water lakes and a collector of nominally hot water of any origin, for example, water heated in solar collectors, water of geothermal sources or thermal waste of anthropogenic activities such as nominally hot water cooled down in a cooling tower, heat-transfer agent heated by low-potential heat of flames of petroleum- and gas-processing, and other low-potential sources.

19. A converter as claimed in Claim 14, in which the ratio of depth $h_c$ of dimples to their dimension $L_{LC}$ along the direction of flow is in the range

$$0.001 \le h_c/L_{LC} \le 0.3,$$

and the ratio of longitudinal dimension $L_{LC}$ of dimple to transverse dimension $L_{BC}$ of dimple is in the range

$$0.25 \le L_{LC}/L_{BC} \le 1.25.$$

20. A tornado-type blower, which is **characterized in that** said blower comprises a stationary body, a rotor accommodated by the stationary body and having blades of longitudinal dimension $Z$ and radius $R$ variable along the blower axis, the shape of the inner boundary surface of said stationary body in the cylindrical coordinate system being defined by the relation

$$Z_{bodyi} R_{body}{}^2 = \text{const}_{body};$$

in so doing, the blower blades, the inner side surface of said stationary body, and the rotor surface form channels which communicate with environment at the blower ends, and the shape and spatial orientation of the blades in cylindrical coordinates associated with the rotation axis of said rotor are defined by the relation

$$f(r, z) = f(r, z_{in}) + (V_{z\pm}/V_{zp})[r_c z^2/2z_{fp}r^2 - k_{\omega p}(z/r_c)],$$

where:

• $r$, $z$, and $f$ are current cylindrical coordinates, the longitudinal axis $Z$ of which coincides with the symmetry axis of the tower;

• $f(r, z_{in})$ is the current azimuthal coordinate which defines the angle between the tangent to the blade wake and the current radius of the blower on the plane crossing the blower blades and, on a normal, the rotation axis of the blower; in so doing, the continuous medium flows into interblade channels via the plane crossing the blades at longitudinal coordinate $Z = Z_{in}$, and the rotation axis of the blower coincides with the longitudinal coordinate axis $Z$;

• $r_c$ is the blower radius;

• $z_{fp}$ is the coordinate of normal cross section of the rotation axis of the blower by the plane via the surface of which the continuous medium flows into the interblade space of the blower;

• $k_{\omega p}$ is the rpm coefficient corresponding to the maximal value of power transferred by the blower blades to the tornado-like flow being formed;

• $V_{z\pm}$ is the longitudinal velocity of the medium flowing into the blower; and

• $V_{zp}$ is the longitudinal velocity of the medium flowing out from the blower;

in so doing, the inner surface of the body and the surface of the blades are made smooth or have the form of alternating segments of initially smooth surface and curvilinear segments in the form of recesses (dimples) of double curvature, which consist of mating quadric surfaces forming convex and concave slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing.

21. A tornado-type turbine, which is **characterized in that** said turbine comprises a stationary body, a rotor accommodated by the stationary body and having blades of longitudinal dimension $Z_i$ and radius $R_i$ variable along the turbine axis, the shape of the inner boundary surface of said stationary body in the cylindrical coordinate system being defined by the relation

$$Z_{bodyi}R_{body}{}^2 = \text{const}_{body};$$

in so doing, the turbine blades, the inner side surface of said stationary body, and the outer surface of said rotor form interblade channels which communicate with environment at the turbine ends, and the shape and spatial orientation of said channels in the coordinate system associated with the rotation axis of the turbine are defined by the relation

$$\varphi(r, z) = \varphi(r, z_{in}) + (r_c z/r^2)(1 - z/2z_{out}) - k_{\omega}(z/r_c),$$

where:

• r, z, and φ are current cylindrical coordinates, the longitudinal axis $Z$ of which coincides with the symmetry axis of the tower;

• $\varphi(r, z_{in})$ is the current azimuthal coordinate which defines the angle between the tangent to the blade wake and the current radius of the turbine on the plane crossing the blower blades and, on the normal, the rotation axis of the turbine; in so doing, the continuous medium flows into the interblade channels via the plane crossing the blades at longitudinal coordinate $Z = Z_{in}$, and the rotation axis coincides with the longitudinal coordinate axis $Z$;

• $\varphi(r, z_{out})$ is the azimuthal coordinate of the cross section of the turbine blades at height $Z_{out}$ by the plane crossing on the normal the rotation axis of the turbine via the surface of which plane the continuous medium flows out from the interblade channels of the turbine into the tower above the turbine;

• $r_c$ is the turbine radius; and

• $k_{\omega}$ is the rpm coefficient corresponding to the maximal value of power transferred by the tornado-like flow to the turbine blades;

in so doing, the inner surface of the body and the surfaces of the blades and of the rotor, which interact with the continuous medium, are made smooth or with a relief in the form of segments of initially smooth surface alternating with curvilinear segments in the form of recesses (dimples) of double curvature, which consist of mating quadric surfaces forming convex and concave slopes of dimples, with the mating of dimples with initially smooth surface being accomplished by means of their convex slopes which have common tangents at all points of mating with the smooth surface and with the surface of the concave part of the dimple; in so doing, the concave part of dimple is made smooth or with a fairing.

Fig. 1

Fig. 2

Fig. 3

Fig. 4

Fig. 6

Fig. 7

Fig. 10

Fig. 12

Fig. 5

Fig. 8

Fig. 9

Fig. 11

## INTERNATIONAL SEARCH REPORT

| | International application No. |
|---|---|
| | PCT/RU 2008/000807 |

**A.   CLASSIFICATION OF SUBJECT MATTER**

F03D 9/00 (2006.01); F24J 2/22 (2006.01); F01D 5/00 (2006.01); F01D 9/00 (2006.01)

According to International Patent Classification (IPC) or to both national classification and IPC

**B.   FIELDS SEARCHED**

Minimum documentation searched (classification system followed by classification symbols)

F03D 1/00-11/04, F24J 2/00-2/54, E06B 9/00, 9/24, F01D 5/00-9/06, F03B 1/00-3/18

Documentation searched other than minimum documentation to the extent that such documents are included in the fields searched

Electronic data base consulted during the international search (name of data base and, where practicable, search terms used)

Esp@senet, PCT ONLINE, USPTO, RUPAT

**C.   DOCUMENTS CONSIDERED TO BE RELEVANT**

| Category* | Citation of document, with indication, where appropriate, of the relevant passages | Relevant to claim No. |
|---|---|---|
| A | RU 2073111 C1 (SEREBYAKOV RUDOLF ANATOLEVICH) 10.02.1997 | 1-11 |
| A | JP 59025091 A (MITSUI SHIPBUILDING ENG) 08.02.1984 | 1-11 |
| A | RU 2183801 C1 (ISACHKIN ANATOLY FEDOROVICH) 20.06.2002 | 12 |
| A | RU 2199025 C1 (TEMERKO ALEKSANDR VIKTOROVICH et al.) 20.02.2003 | 13-19 |
| A | US 4504196 A (JOACHIM E. LAY) 12.03.1985 | 20-21 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August 2009 (10.08.2009) | 24 September 2009 (24.09.2009) |

| Name and mailing address of the ISA/ | Authorized officer |
|---|---|
| **RU** | |
| Facsimile No. | Telephone No. |

Form PCT/ISA/210 (second sheet) (July 1998)

## INTERNATIONAL SEARCH REPORT

| International application No. |
| --- |
| PCT/RU 2008/000807 |

| Box No. II  Observations where certain claims were found unsearchable (Continuation of item 2 of first sheet) |
| --- |

This international search report has not been established in respect of certain claims under Article 17(2)(a) for the following reasons:

1. ☐ Claims Nos.:
  because they relate to subject matter not required to be searched by this Authority, namely:

2. ☐ Claims Nos.:
  because they relate to parts of the international application that do not comply with the prescribed requirements to such an extent that no meaningful international search can be carried out, specifically:

3. ☐ Claims Nos.:
  because they are dependent claims and are not drafted in accordance with the second and third sentences of Rule 6.4(a).

| Box No. III  Observations where unity of invention is lacking (Continuation of item 3 of first sheet) |
| --- |

This International Searching Authority found multiple inventions in this international application, as follows:

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

Remark on Protest  ☒ The additional search fees were accompanied by the applicant's protest and, where applicable, the payment of a protest fee.

  ☐ The additional search fees were accompanied by the applicant's protest but the applicable protest fee was not paid within the time limit specified in the invitation.

  ☐ No protest accompanied the payment of additional search fees.

Form PCT/ISA/210 (continuation of first sheet (2)) (April 2005)

INTERNATIONAL SEARCH REPORT

| International application No. |
| --- |
| PCT/RU 2008/000807 |

The application contains the following four groups of inventions:

- independent claims 1, 4 and 8 are linked by the following special technical features: the surface of the converging tube has double-curved indentations therein;

- independent claim 12 has the following special technical feature: the ducts have a profiled surface;

- independent claims 13-14 are linked by the following special technical features: the surface of the magnetically soft material has a relief;

- independent claims 20-21 are linked by the following special technical features: the surface of the housing and of the blades has a particular shape.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 167091887 A
- US 4280571890 A
- SU 1295027
- SU 1341377
- SU 1414046
- SU 1453998
- SU 1793525
- JP 59025091 A
- RU 2020304
- RU 2023216
- RU 2040127
- RU 2044248
- SG 47069
- RU 2059881
- EP 0839309 A
- EP 92911873 A
- EP 96927047 A
- US 6006823 A
- US 6119987 A
- RU 2109173 C1
- RU 2109227
- RU 2167338
- RU 2172904
- RU 2183801
- RU 2199025
- RU 2199024
- RU 2210840
- RU 2210839
- WO 03004868 A
- EP 03012638 A
- EP 1458972 A
- WO 2004048871 A
- WO 2004083651 A
- WO 2004083628 A
- US 20040240984 A1
- EP 1606512 A
- RU 2005000096 W
- EP 1873397 A2
- EP 1878983 A1
- EP 1890035 A2
- CN 1888359
- GB 16709 A
- US 428057 A
- RU 2199025 C1
- SU 1793525 A
- RU 2285210
- RU 2285210 C
- RU 2183801 C1
- SU 1662172 A

### Non-patent literature cited in the description

- **Rangwalla, A.A. ; Hsu, C.T.** Power Coefficient of Tornado-Type Wind Turbines. *Energy,* 1983, vol. 7 (6), 735
- **Hsu, C.T. ; Ide, H.** Performance of Tornado Type Wind Turbines with Radial Supply. *Energy,* vol. 7 (6), 452
- **So, R.M.C.** On Vortex Wind Power. *J. Fluids Eng.,* 1978, vol. 100, 79
- **Burgers, J.M.** A Mathematical Model Illustrating the Theory of Turbulence. *Adv. Appl. Mech.,* 1948, vol. 1, 157
- **Mitchell, A.** Investigations of the Tornado Wind Energy System. American Solar Energy Society, June 1985